# EUROPEAN PATENT SPECIFICATION

(11) **EP 3 800 553 B1**
(45) Date of publication and mention of the grant of the patent: **16.03.2022**
(21) Application number: 20198649.4
(22) Date of filing: 28.09.2020
(51) Int. Cl.: G06F 11/14, G06F 9/46, G06F 11/34, G06F 9/52

(54) **INFORMATION PROCESSING SYSTEM, INFORMATION PROCESSING METHOD, AND INFORMATION PROCESSING PROGRAM**
INFORMATIONSVERARBEITUNGSSYSTEM, INFORMATIONSVERARBEITUNGSVERFAHREN UND INFORMATIONSVERARBEITUNGSPROGRAMM
PROGRAMME, PROCÉDÉ ET SYSTÈME DE TRAITEMENT D'INFORMATIONS

(30) Priority: 04.10.2019 JP 2019184102
(43) Date of publication of application: 07.04.2021
(73) Proprietor: FUJITSU LIMITED, Kanagawa 211-8588 (JP)
(72) Inventor: Itakura, Kota, Kanagawa, 211-8588 (JP); Onishi, Takafumi, Kanagawa, 211-8588 (JP); Okabayashi, Miwa, Kanagawa, 211-8588 (JP); Matsumoto, Tatsuro, Kanagawa, 211-8588 (JP); Matsui, Kazuki, Kanagawa, 211-8588 (JP)
(74) Representative: Hoffmann Eitle

(56) References cited:
- WO-A1-2017/123849
- US-A1- 2004 221 054
- US-A1- 2017 116 089

## Description

### FIELD

The embodiments discussed herein are related to an information processing system, an information processing method, and an information processing program.

### BACKGROUND

In the related art, there is a stream processing infrastructure that sequentially processes data output from a data store with a plurality of tasks.
In addition, there is a technique for periodically inputting a barrier marker from the data store, backing up the internal state when the barrier marker arrives for each task, and restoring the stream processing infrastructure even when the stream processing infrastructure fails.

For example, there is a technique for setting a checkpoint to process regardless of the time it takes for another process to set a checkpoint to the state of another process, and then returning each process to its original operation. In addition, for example, there is a technique in which a marker is introduced in a data stream from a transmission node so that a transfer node or a reception side may trace the reception of the data stream.

Related technologies are disclosed in, for example, Japanese National Publication of International Patent Application Nos. 2003-516581 and 2007-538312.

WO 2017/123849 A1 discusses processing a stream of contiguous data units. The document discloses a system for recoverable stream processing, whereby a checkpointing of the streaming operations is performed in regular intervals, said checkpoints allowing a restart of streaming operations from the checkpoint in case of a failure. When a checkpoint is performed, streaming processing at the node performing the checkpoint is halted until the checkpoint has finished.

US 2017/115089 A1 discusses an event processing system for performing recovery of events during system failure.

US 2004/221054 A1 discusses a method for dynamically reconfiguring multimedia streaming processing modules where modules are stopped when all modules in the stream being changed receive a notification packet.

### SUMMARY

In an aspect, the object of the present disclosure is to suppress an increase in waiting time of a message.

The invention is defined by the features laid down in the independent claims 1, 12 and 13. Further enhancements are provided by the dependent claims.

### BRIEF DESCRIPTION OF DRAWINGS

FIG. 1 is an explanatory diagram illustrating an example of the configuration of an information processing system;
FIG. 2 is an explanatory diagram illustrating an example of the operation contents of a stream processing infrastructure;
FIG. 3A is an explanatory diagram (part 1) illustrating an example of the processing contents of a distributed checkpoint method;
FIG. 3B is an explanatory diagram (part 2) illustrating an example of the processing contents of the distributed checkpoint method;
FIG. 3C is an explanatory diagram (part 3) illustrating an example of the processing contents of the distributed checkpoint method;
FIG. 3D is an explanatory diagram (part 4) illustrating an example of the processing contents of the distributed checkpoint method;
FIG. 3E is an explanatory diagram (part 5) illustrating an example of the processing contents of the distributed checkpoint method;
FIG. 4 is an explanatory diagram illustrating an example of an information processing method according to an embodiment;
FIG. 5 is a block diagram illustrating an example of the hardware configuration of a control device;
FIG. 6 is an explanatory diagram illustrating an example of a data message;
FIG. 7 is an explanatory diagram illustrating an example of a configuration change message;
FIG. 8 is an explanatory diagram illustrating an example of the stored contents of a connection configuration table;
FIG. 9 is an explanatory diagram illustrating an example of the stored contents of a threshold table;
FIG. 10 is a block diagram illustrating an example of the hardware configuration of a storage device;
FIG. 11 is a block diagram illustrating an example of the hardware configuration of an arithmetic device;
FIG. 12 is an explanatory diagram illustrating an example of the stored contents of an internal state table;
FIG. 13 is a block diagram illustrating an example of the functional configuration of the information processing system;
FIG. 14 is a block diagram illustrating an example of the specific functional configuration of the information processing system;
FIG. 15 is an explanatory diagram (part 1) illustrating an example of changing the connection configuration of the stream processing infrastructure from a direct configuration to a re-input configuration in Example 1;
FIG. 16 is an explanatory diagram (part 2) illustrating an example of changing the connection configuration of the stream processing infrastructure from the direct configuration to the re-input configuration in Example 1;
FIG. 17 is an explanatory diagram illustrating an example of acquiring the waiting time;
FIG. 18 is an explanatory diagram (part 1) illustrating an example of changing the connection configuration of the stream processing infrastructure from the re-input configuration to the direct configuration in Example 1;
FIG. 19 is an explanatory diagram (part 2) illustrating an example of changing the connection configuration of the stream processing infrastructure from the re-input configuration to the direct configuration in Example 1;
FIG. 20 is an explanatory diagram (part 3) illustrating an example of changing the connection configuration of the stream processing infrastructure from the re-input configuration to the direct configuration in Example 1;
FIG. 21 is an explanatory diagram (part 4) illustrating an example of changing the connection configuration of the stream processing infrastructure from the re-input configuration to the direct configuration in Example 1;
FIG. 22 is an explanatory diagram (part 5) illustrating an example of changing the connection configuration of the stream processing infrastructure from the re-input configuration to the direct configuration in Example 1;
FIG. 23 is an explanatory diagram (part 6) illustrating an example of changing the connection configuration of the stream processing infrastructure from the re-input configuration to the direct configuration in Example 1;
FIG. 24 is an explanatory diagram (part 1) illustrating an example of comparing a processing delay in the direct configuration and a processing delay in the re-input configuration;
FIG. 25 is an explanatory diagram (part 2) illustrating an example of comparing a processing delay in the direct configuration and a processing delay in the re-input configuration;
FIG. 26 is an explanatory diagram (part 3) illustrating an example of comparing a processing delay in the direct configuration and a processing delay in the re-input configuration;
FIG. 27 is an explanatory diagram (part 4) illustrating an example of comparing a processing delay in the direct configuration and a processing delay in the re-input configuration;
FIG. 28 is a flowchart illustrating an example of the overall processing procedure in Example 1;
FIG. 29 is a flowchart illustrating an example of a change processing procedure in Example 1;
FIG. 30 is a flowchart (part 1) illustrating an example of a task processing procedure in Example 1;
FIG. 31 is a flowchart (part 2) illustrating an example of the task processing procedure in Example 1;
FIG. 32 is a flowchart illustrating an example of a re-input processing procedure in Example 1;
FIG. 33 is a flowchart illustrating an example of a reception processing procedure in Example 1;
FIG. 34 is an explanatory diagram (part 1) illustrating an example of changing the connection configuration of the stream processing infrastructure from a direct configuration to a re-input configuration in Example 2;
FIG. 35 is an explanatory diagram (part 2) illustrating an example of changing the connection configuration of the stream processing infrastructure from the direct configuration to the re-input configuration in Example 2;
FIG. 36 is an explanatory diagram (part 1) illustrating an example of changing the connection configuration of the stream processing infrastructure from the re-input configuration to the direct configuration in Example 2;
FIG. 37 is an explanatory diagram (part 2) illustrating an example of changing the connection configuration of the stream processing infrastructure from the re-input configuration to the direct configuration in Example 2;
FIG. 38 is an explanatory diagram (part 3) illustrating an example of changing the connection configuration of the stream processing infrastructure from the re-input configuration to the direct configuration in Example 2;
FIG. 39 is an explanatory diagram (part 4) illustrating an example of changing the connection configuration of the stream processing infrastructure from the re-input configuration to the direct configuration in Example 2;
FIG. 40 is a flowchart (part 1) illustrating an example of a task processing procedure in Example 2;
FIG. 41 is a flowchart (part 2) illustrating an example of the task processing procedure in Example 2;
FIG. 42 is a flowchart illustrating an example of a re-input processing procedure in Example 2; and
FIG. 43 is a flowchart illustrating an example of a reception processing procedure in Example 2.

### DESCRIPTION OF EMBODIMENTS

In the related art as described above, it is difficult to suppress the increase in the waiting time of the barrier marker in the task. For example, when there exists a plurality of paths at which a barrier marker arrive in a task, the processing on data after the barrier marker may be delayed because the internal state is backed up to guarantee the consistency at the time of restoration after the barrier marker arrives from all the paths.

Hereinafter, a technique capable of suppressing the increase in message waiting time according to an embodiment will be described in detail with reference to the accompanying drawings.

### Example of Information Processing Method according to Embodiment

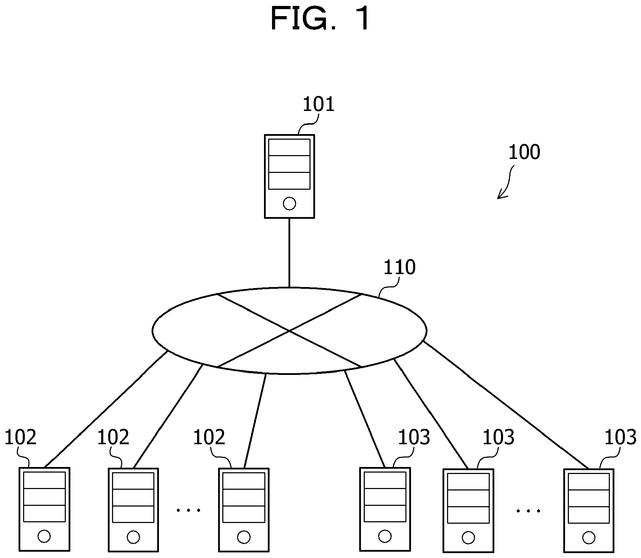

First, an example of an information processing method according to an embodiment will be described with reference to FIGs. 1 to 4. FIG. 1 is an explanatory diagram illustrating an example of the configuration of an information processing system 100. In FIG. 1, the information processing system 100 includes a control device 101, a plurality of storage devices 102, and a plurality of arithmetic devices 103.

In the information processing system 100, the control device 101, the storage devices 102, and the arithmetic devices 103 are connected to each other via a wired or wireless network 110. The network 110 is, for example, a LAN (Local Area Network), a WAN (Wide Area Network), the Internet, or the like.

The control device 101 is a computer that controls the plurality of storage devices 102 and the plurality of arithmetic devices 103. For example, the control device 101 is able to control the plurality of storage devices 102 and the plurality of arithmetic devices 103 to change the configuration of the information processing system 100. The control device 101 is, for example, a server, a PC (Personal Computer), or the like.

Each of the storage devices 102 is a computer that stores data. For example, the storage device 102 collects and stores data from one or more data sources, and outputs the data to one of the arithmetic devices 103. The storage device 102 operates, for example, as a data store. The storage device 102 is, for example, a server, a PC, or the like.

The data source is, for example, a PC, a tablet terminal, a smartphone, a wearable terminal, an IoT device such as a home appliance or the like, an in-vehicle device, a sensor device, or the like.

Each of the arithmetic devices 103 is a computer that processes data. For example, the arithmetic device 103 is equipped with a task for performing a predetermined data process, performs the predetermined data process by the task based on input data, and outputs data of the processing result of the task. The task is, for example, implemented by a processing unit. The output destination is, for example, another arithmetic device 103. The arithmetic device 103 is, for example, a server, a PC, or the like.

Here, a case where the control device 101 is different from the storage device 102 has been described, but the present disclosure is not limited thereto. For example, the control device 101 may also operate as the storage device 102.

In addition, here, a case where the control device 101 is different from the arithmetic device 103 has been described, but the present disclosure is not limited thereto. For example, the control device 101 may also operate as the arithmetic device 103.

In addition, here, a case where the storage device 102 is different from the arithmetic device 103 has been described, but the present disclosure is not limited thereto. For example, the storage device 102 may also operate as the arithmetic device 103.

In addition, here, a case where the storage device 102 is different from the data source has been described, but the present disclosure is not limited thereto. For example, storage device 102 may also operation as the data source.

In addition, in the information processing system 100, the control device 101 is able to change the connection relationship between the arithmetic devices 103, the connection relationship between the storage device 102 and the arithmetic device 103, and the like. Further, in the information processing system 100, the control device 101 is able to change the processing contents of the arithmetic devices 103 and is able to move the processing contents between the arithmetic devices 103.

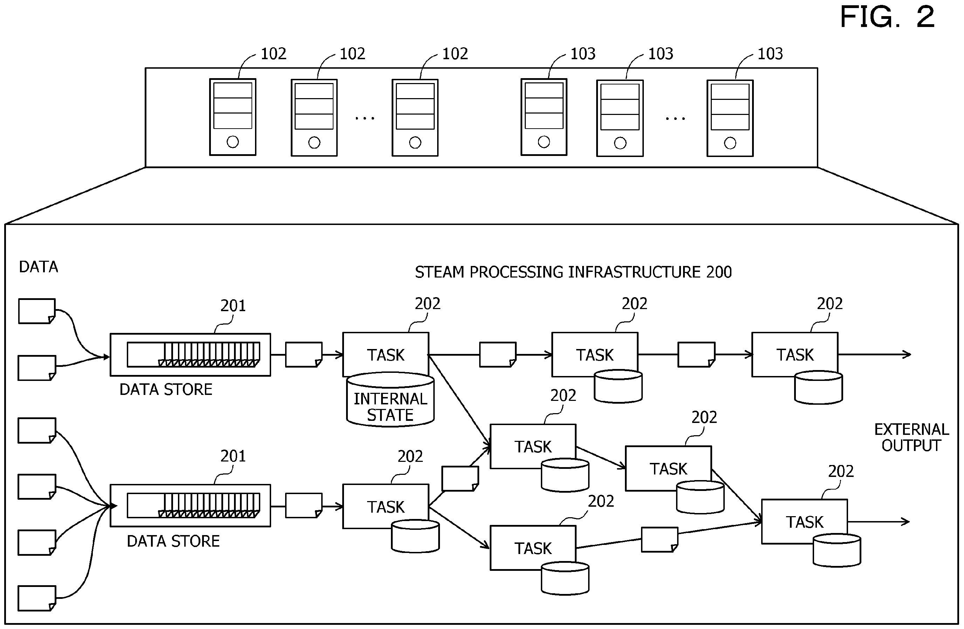

The information processing system 100 processes data, for example, in a stream processing format. The information processing system 100 specifically implements the stream processing infrastructure 200. Next, an example of the operation contents of the stream processing infrastructure 200 will be described with reference to FIG. 2.

FIG. 2 is an explanatory diagram illustrating an example of the operation contents of the stream processing infrastructure 200. As illustrated in FIG. 2, the stream processing infrastructure 200 implements a specific service in the manner that data collected by the data store 201 from one or more data sources and output from the data store 201 are sequentially processed by a plurality of tasks 202.

The data store 201 is implemented by, for example, the storage device 102, and the task 202 is executed by, for example, the arithmetic device 103.

Specifically, when the data source is an in-vehicle device and the data store 201 collects vehicle speed data, the stream processing infrastructure 200 may implement a service for detecting a dangerous driving of the vehicle and preventing a traffic accident.

In addition, specifically, when the data source is a wearable terminal or an IoT device and the data store 201 collects human biometric data and life data, the stream processing infrastructure 200 may implement a service for managing the physical condition of the human.

Further, specifically, when the data source is a sensor device installed in a river and the data store 201 collects water level data of the river, the stream processing infrastructure 200 may implement a service for detecting a natural disaster and coping with the disaster.

It may be desired that the stream processing infrastructure 200 sequentially processes data, such as sensor data, which are repeatedly generated at the data source, by the plurality of tasks 202. Therefore, it is desired to secure the fault tolerance of the stream processing infrastructure 200 while suppressing the processing delay for data, and it is required to cause the stream processing infrastructure 200 to be restored from a fault. The fault is, for example, a failure, a blackout, a communication disconnection, or the like of the storage device 102 or the arithmetic device 103.

Here, as one of methods for securing the fault tolerance of the stream processing infrastructure 200, there is a method called a distributed checkpoint method. The distributed checkpoint method is a method in which the internal state of each task 202 is regularly backed up as a checkpoint and a predetermined data process may be redone based on the checkpoint when a fault occurs. The distributed checkpoint method aims to secure the fault tolerance of the stream processing infrastructure 200 while suppressing the processing delay for data by executing the backup of the internal state in a distributed manner for each task 202.

The control device 101 inputs a special message called a barrier marker to the stream processing infrastructure 200 in order to implement the distributed checkpoint method. The barrier marker includes, for example, an identifier unique to the barrier marker. The barrier marker may include, for example, the number of times that the barrier marker has been input to the stream processing infrastructure 200.

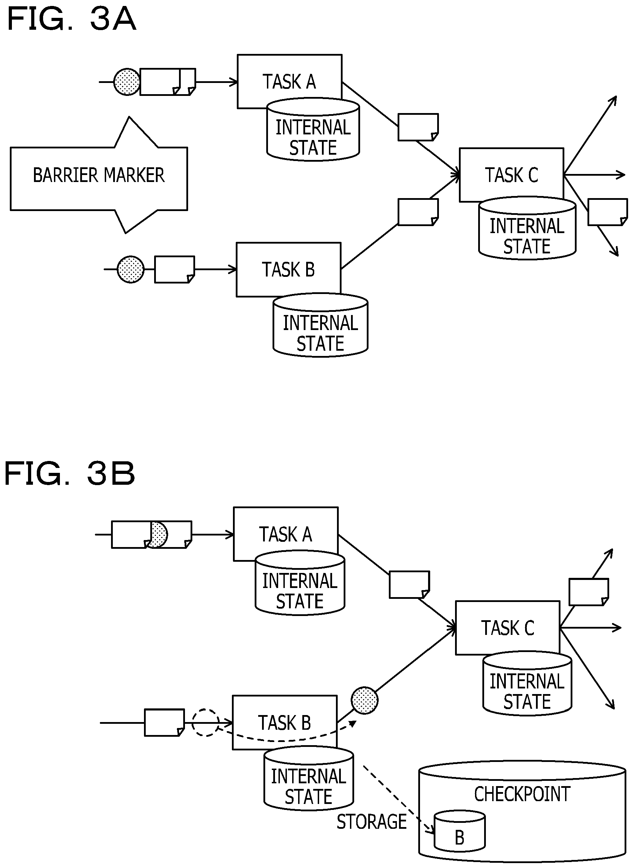

Then, the task 202 backs up the internal state when the barrier marker arrives. When there is a plurality of paths at which the barrier marker arrives, the task 202 backs up the internal state after the barrier markers are input from all the paths. The path may be a logical path or a physical path. Next, an example of the processing contents of the distributed checkpoint method will be described with reference to FIGs. 3A to 3E.

FIGs. 3A to 3E are explanatory diagrams illustrating an example of the processing contents of the distributed checkpoint method. In the example of FIGs. 3A to 3D, a task A, a task B, and a task C exist and are implemented by the arithmetic devices 103. Data of the processing result of the task A is output to the task C, and data of the processing result of the task B is output to the task C. It is assumed that the task B tends to have a shorter processing time than the task A. Next, descriptions will be made while referring to FIG. 3A.

In FIG. 3A, the control device 101 causes a barrier marker to be output from each of the plurality of data stores 201. In the figure, a barrier marker is indicated by, for example, a hatched circle. Further, in the figure, a barrier marker or data indicated on an arrow represents, for example, that the barrier marker or data exists on a communication path or exists in a buffer of a task at the end of an arrow and is in a processing waiting state. In the example of FIG. 3A, it is assumed that the barrier marker has not yet arrived at the task A and the task B. Next, descriptions will be made while referring to FIG. 3B.

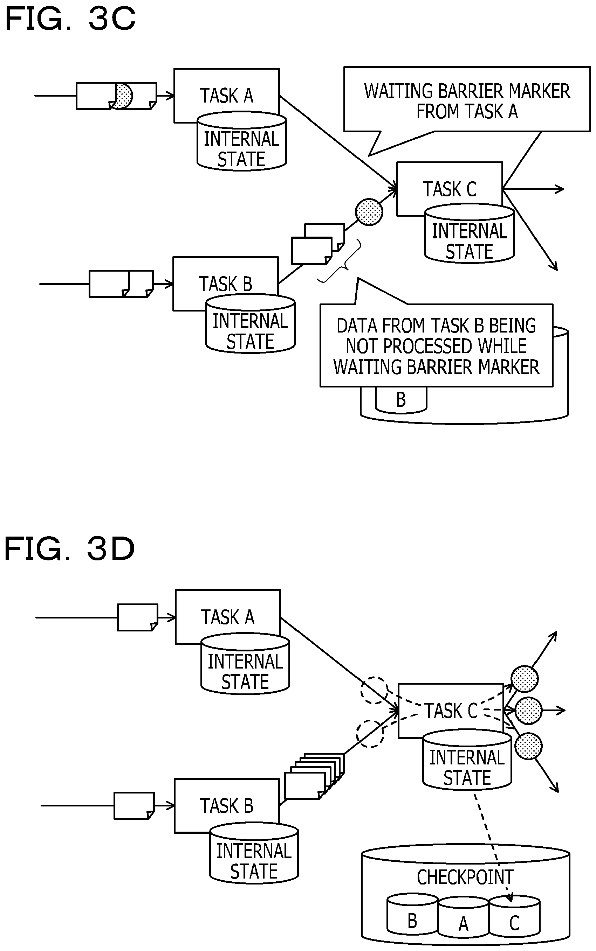

In FIG. 3B, the task B tends to have a shorter processing time than the task A and has completed a predetermined data process based on data before the barrier marker, and the barrier marker has arrived, so the task B backs up the internal state to the checkpoint. The task B outputs the barrier marker to the task C after backing up the internal state to the checkpoint. Next, descriptions will be made while referring to FIG. 3C.

In FIG. 3C, the task B performs a predetermined data process based on data after the barrier marker, and outputs data of the processing result to the task C. Meanwhile, since the barrier marker from the task B has arrived but the barrier marker from the task A has not yet arrived, the task C waits until the barrier marker from the task A arrives.

Here, when the task C performs a predetermined data process based on the data received from the task B, the consistency at the time of restoration will not be ensured. Therefore, the task C suspends the data received from the task B without performing the predetermined data process based on the data received from the task B. Next, descriptions will be made while referring to FIG. 3D.

In FIG. 3D, the task A has completed the predetermined data process based on the data before the barrier marker and the barrier marker has arrived, so the task A backs up the internal state to the checkpoint. The task A outputs the barrier marker to the task C after backing up the internal state to the checkpoint.

The task C backs up the internal state to the checkpoint since the barrier marker has arrived from the task A and the task B. The task C outputs the barrier marker to the downstream of the task C after backing up the internal state to the checkpoint.

Here, the checkpoint has the internal states of the task A, the task B, and the task C when a predetermined data process has been performed based on the data before the barrier marker and the predetermined data process is not performed based on the data after the barrier marker. Therefore, even when a fault occurs in the stream processing infrastructure 200, when the predetermined data process is performed again based on the data after the barrier marker by referring to the checkpoint, the stream processing infrastructure 200 may be restored from the fault.

At this time, in the related art, it is difficult to suppress an increase in waiting time of the barrier marker from the task A and the barrier marker from the task B in the task C. Further, when the barrier marker does not arrive from both the task A and the task B, the task C does not perform the data process on the data after the barrier marker, which results in an increase in processing delay for the data after the barrier marker with the increase in waiting time.

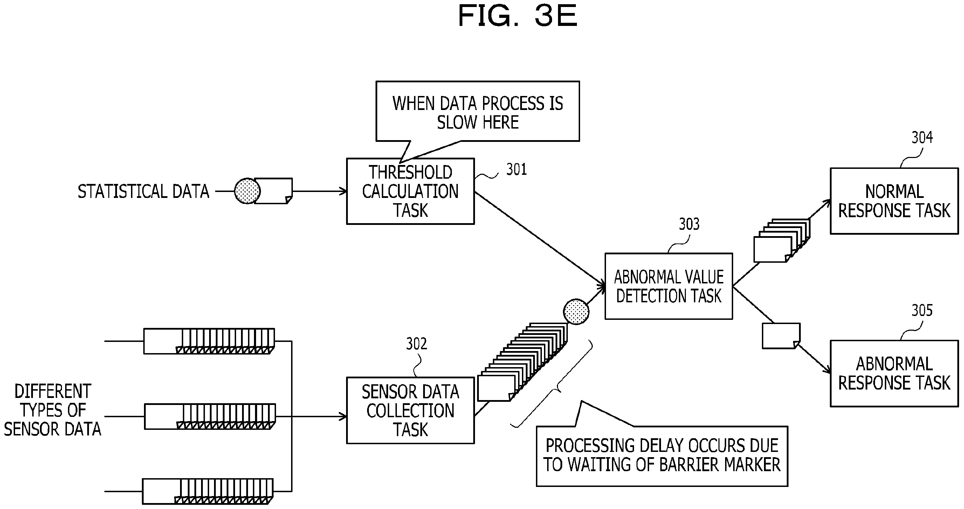

Next, descriptions will be made while referring to FIG. 3E, in which a specific example of a situation that causes an increase in processing delay for data after the barrier marker will be described.

In the example of FIG. 3E, there are a threshold calculation task 301, a sensor data collection task 302, an abnormal value detection task 303, a normal response task 304, and an abnormal response task 305.

The threshold calculation task 301 is a task 202 that receives, for example, statistical data, performs a first data process of calculating a threshold based on the statistical data, and outputs threshold data, which is the processing result, to the abnormal value detection task 303.

The sensor data collection task 302 is a task 202 that collects, for example, different types of sensor data, performs a second data process of summing the sensor data, and outputs summed data, which is the processing result, to the abnormal value detection task 303.

The abnormal value detection task 303 is a task 202 that performs a third data process of detecting an abnormal value of a sensor, for example, based on the threshold data and the summed data, and outputs data of the detection result to the normal response task 304 or the abnormal response task 305.

The normal response task 304 is a task 202 that performs a fourth data process corresponding to the normal response, for example, based on data of the detection result. The abnormality response task 305 is a task 202 that performs a fifth data process corresponding to the abnormality response, for example, based on data of the detection result.

In FIG. 3E, it is assumed that the processing time required for the sensor data collection task 302 tends to become shorter than the processing time required for the threshold calculation task 301. Therefore, the abnormal value detection task 303 is likely to receive the barrier marker from the sensor data collection task 302 earlier than the barrier marker from the threshold calculation task 301.

In this case, the abnormal value detection task 303 waits until the barrier marker from the threshold calculation task 301 is received, and temporarily holds the summed data after the barrier marker from the sensor data collection task 302 without performing the third data process on the summed data. Accordingly, as the processing time required for the threshold calculation task 301 becomes longer than the processing time required for the sensor data collection task 302, the processing delay of the summed data after the barrier marker from the sensor data collection task 302 in the abnormal value detection task 303 also becomes longer.

Therefore, in the present embodiment, descriptions will be made on an information processing method for suppressing an increase in message waiting time by configuring the connection configuration of the stream processing infrastructure 200 to re-input data of the processing results of the task 202 to the data store 201.

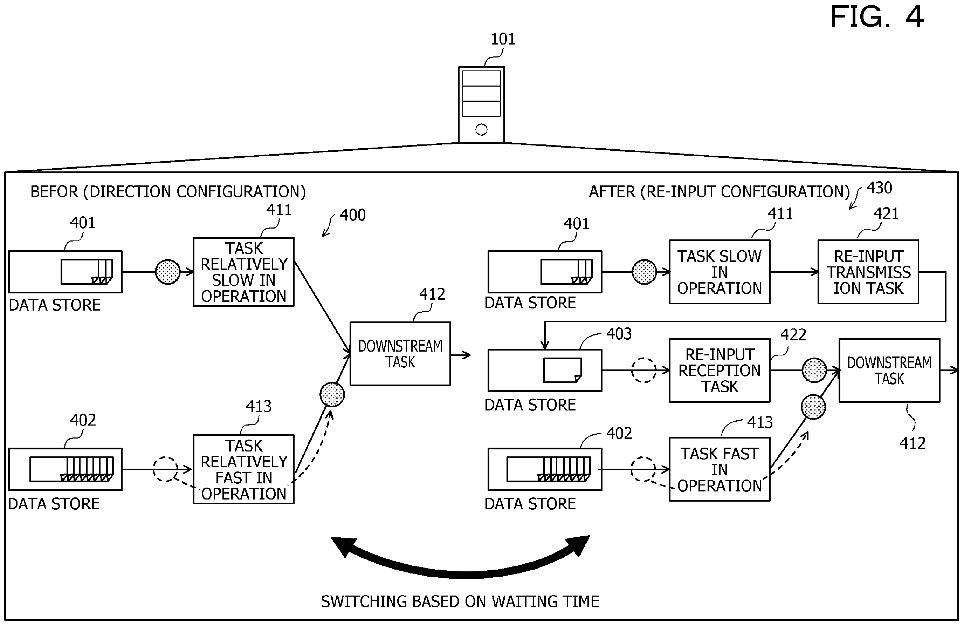

FIG. 4 is an explanatory diagram illustrating an example of the information processing method according to an embodiment. In the example of FIG. 4, there exists a plurality of data stores 201 including a first data store 401, a second data store 402, and a third data store 403. In addition, there exists a plurality of processing unit for implementing the task 202, including a first processing unit 411, a second processing unit 412, a third processing unit 413, a fourth processing unit 421, and a fifth processing unit 422.

Each of the processing units is the task 202 or a functional unit that implements the task 202. The first processing unit 411 implements the task 202 that is relatively slow in operation. The second processing unit 412 implements the task 202 that is relatively slow in operation, and a downstream of the task 202 that is relatively fast in operation. The third processing unit 413 implements the task 202 that is relatively fast in operation.

Each of the processing units will may receive a barrier marker. Each processing unit performs backup of the internal state of the own processing unit in response to receiving barrier markers as many as the number of paths through which data is input to the own processing unit, and at the same time, outputs a barrier marker to each path through which data is output from the own processing unit. The barrier marker is, for example, a message instructing the backup of the internal state.

Here, it is assumed that the initial connection configuration of the stream processing infrastructure 200 is a direct configuration 400 that is a first configuration that does not include the third data store 403 on a path from the first processing unit 411 to the second processing unit 412.

In the direct configuration 400, the first data store 401 outputs data to a path connected to the first processing unit 411. In the example of FIG. 4, the first data store 401 outputs data directly to the first processing unit 411. In the direct configuration 400, the first processing unit 411 outputs data directly to the second processing unit 412.

In the direct configuration 400, the second data store 402 outputs data to a path connected to the second processing unit 412. In the example of FIG. 4, the third processing unit 413, which is other processing unit, is included between the second data store 402 and the second processing unit 412.

The control device 101 causes a barrier marker to be output from each of the plurality of data stores 201 at a predetermined timing. In the example of FIG. 4, the third processing unit 413 outputs data directly to the second processing unit 412.

In addition, the control device 101 acquires information about the waiting time until the second processing unit 412 receives barrier markers as many as the number of paths through which data is input to the second processing unit 412. The control device 101 determines whether or not the waiting time is equal to or more that a first threshold based on the acquired information. When it is determined that the waiting time is equal to or more than the first threshold, the control device switches the connection configuration of the stream processing infrastructure 200 from the direct configuration 400 to a re-input configuration 430 that is a second configuration including the third data store 403 on a path from the first processing unit 411 to the second processing unit 412.

In the re-input configuration 430, the first data store 401 outputs data to the path connected to the first processing unit 411, similarly to the direct configuration 400. In the re-input configuration 430, unlike the direct configuration 400, the first processing unit 411 does not output the data directly to the second processing unit 412, but outputs data to a path connected to the fourth processing unit 421 that implements a re-input transmission task. The fourth processing unit 421 outputs data directly to the third data store 403. The fourth processing unit 421 does not output a barrier marker to the third data store 403.

The third data store 403 stores received data and outputs the received data to a path to the fifth processing unit 422 that implements a re-input reception task. The fifth processing unit 422 outputs data to a path connected to the second processing unit 412. In the re-input configuration 430, the second data store 402 outputs data to a path connected to the second processing unit 412, similarly to the direct configuration 400. The third processing unit 413 outputs data directly to the second processing unit 412. In the re-input configuration 430 as well, the control device 101 causes a barrier marker to be output from each of the plurality of data stores 201 at a predetermined timing.

As a result, the control device 101 will reduce the waiting time of the barrier marker in the second processing unit 412. For example, the control device 101 will cause the second processing unit 412 to receive barrier markers from the third processing unit 413 and the fifth processing unit 422 and perform the data process on data after the barrier markers. For this reason, the control device 101 will suppress the processing delay for data after the barrier marker in the second processing unit 412 even in a situation where the processing time required for the first processing unit 411 becomes so long that the first processing unit 411 does not output a barrier marker.

Here, a case has been described where the control device 101 switches the connection configuration of the stream processing infrastructure 200 from the direct configuration 400 to the re-input configuration 430, but the present disclosure is not limited thereto. For example, in a situation where it is predicted that the waiting time of the barrier marker in the second processing unit 412 will be relatively short, the control device 101 will switch the connection configuration of the stream processing infrastructure 200 from the re-input configuration 430 to the direct configuration 400. At this time, it is desired that the control device 101 secures the consistency of the data process order in the stream processing infrastructure 200.

In addition, for example, the connection configuration of the stream processing infrastructure 200 may be fixed by the re-input configuration 430. Specifically, in a situation where it is predicted that the waiting time of the barrier marker in the second processing unit 412 will be relatively long in advance, the connection configuration of the stream processing infrastructure 200 may be fixed to the re-input configuration 430.

### Example of Hardware Configuration of Control Device 101

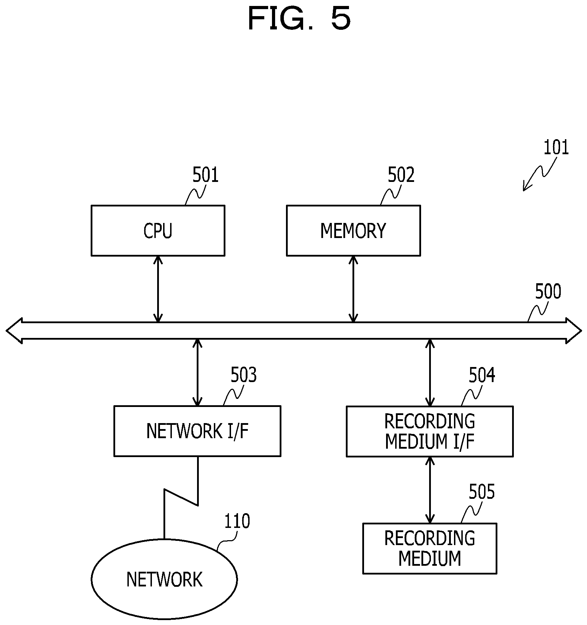

Next, an example of the hardware configuration of the control device 101 will be described with reference to FIG. 5.

FIG. 5 is a block diagram illustrating an example of the hardware configuration of the control device 101. In FIG. 5, the control device 101 includes a CPU (Central Processing Unit) 501, a memory 502, a network I/F (Interface) 503, a recording medium I/F 504, and a recording medium 505, which are interconnected by a bus 500.

Here, the CPU 501 is in charge of the overall control of the control device 101. The memory 502 has, for example, a ROM (Read Only Memory), a RAM (Random Access Memory), a flash ROM, and the like. Specifically, for example, the flash ROM or the ROM stores various programs, and the RAM is used as a work area of the CPU 501. The programs stored in the memory 502 are loaded into the CPU 501 and cause the CPU 501 to execute a coded process.

The network I/F 503 is connected to the network 110 via a communication line and is connected to another computer via the network 110. The network I/F 503 is in charge of an internal interface with the network 110 and controls the input/output of data from/to another computer. The network I/F 503 is, for example, a modem, a LAN adapter, or the like.

The recording medium I/F 504 controls read/write of data from/in the recording medium 505 according to the control of the CPU 501. The recording medium I/F 504 is, for example, a disk drive, an SSD (Solid State Drive), a USB (Universal Serial Bus) port, or the like. The recording medium 505 is a nonvolatile memory that stores data written under the control of the recording medium I/F 504. The recording medium 505 is, for example, a disk, a semiconductor memory, a USB memory, or the like. The recording medium 505 may be removable from the control device 101.

The control device 101 may include, for example, a keyboard, a mouse, a display, a printer, a scanner, a microphone, a speaker, etc., in addition to the above-described components. Further, the control device 101 may include a plurality of recording medium I/Fs 504 and recording media 505. Further, the control device 101 may not have the recording medium I/F 504 or the recording medium 505.

### Example of Data Message 600

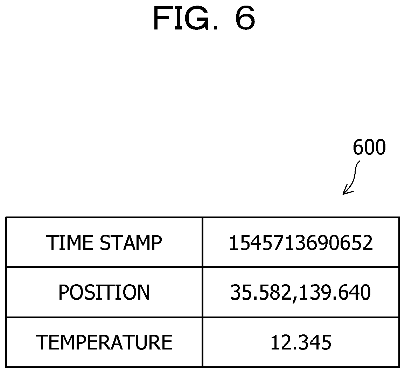

Next, an example of a data message 600 will be described with reference to FIG. 6. The data message 600 is output by, for example, the storage device 102 or the arithmetic device 103. The data message 600 is, for example, sensor data.

FIG. 6 is an explanatory diagram illustrating an example of the data message 600. As illustrated in FIG. 6, the data message 600 has fields of time stamp, position, and temperature. The data message 600 is formed by setting information in each field at each time point.

A time stamp indicating the time point is set in the field of time stamp. A position measured by the sensor device at the time point indicated by the time stamp is set in the field of position. A temperature measured by the sensor device at the time point indicated by the time stamp is set in the field of temperature.

### Example of Configuration Change Message 700

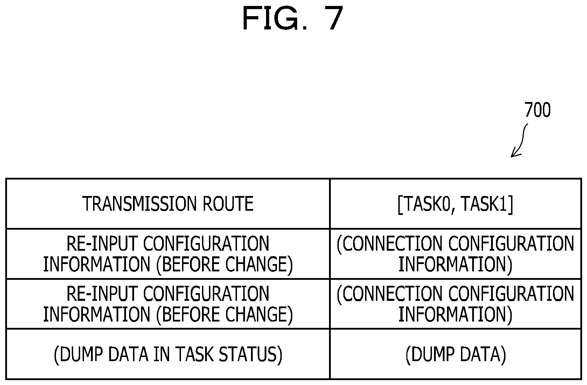

Next, an example of a configuration change message 700 will be described with reference to FIG. 7. The configuration change message 700 is output by the control device 101 and is transferred by the storage device 102 or the arithmetic device 103.

FIG. 7 is an explanatory diagram illustrating an example of the configuration change message 700. As illustrated in FIG. 7, the configuration change message 700 has fields of transmission route, re-input configuration information (before change), and re-input configuration information (after change).

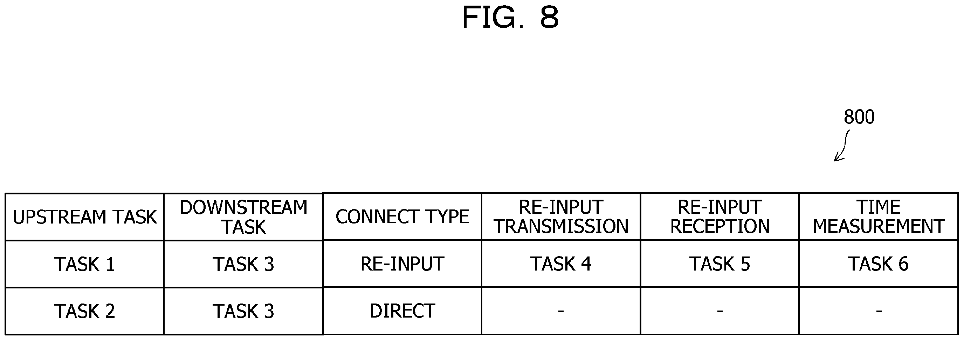

A transmission route of the configuration change message 700 is set in the field of transmission route. The transmission route is, for example, a transmission route up to the task 202 that forms a connection point for changing the connection configuration. Connection configuration information indicating the connection configuration before a change is set in the field of re-input configuration information (before change). The connection configuration information is, for example, the same as the record of a connection configuration table 800 illustrated in FIG. 8. Connection configuration information indicating the connection configuration after change is set in the field of re-input configuration information (after change). The configuration change message 700 may further include a field of task status dump data. Task status dump data is set in the field of task status dump data.

### Contents Stored in Connection Configuration Table 800

Next, an example of the contents stored in the connection configuration table 800 will be described with reference to FIG. 8. The connection configuration table 800 is implemented by, for example, a storage area such as the memory 502, the recording medium 505, or the like of the control device 101 illustrated in FIG. 5.

FIG. 8 is an explanatory diagram illustrating an example of the stored contents of the connection configuration table 800. As illustrated in FIG. 8, the connection configuration table 800 includes fields of upstream task, downstream task, connection type, re-input transmission, re-input reception, and time measurement. In the connection configuration table 800, connection configuration information is stored as a record by setting information in each field for each connection point.

A task name of an upstream task that forms a connection point is set in the field of upstream task. A task name of a downstream task that forms a connection point is set in the field of downstream task. Information indicating whether the connection type of a connection point is the direct configuration or the re-input configuration is set in the field of connection type. A task name of a re-input transmission task in the re-input configuration is set in the field of re-input transmission. A task name of a re-input reception task in the re-input configuration is set in the field of re-input reception. A task name of a time measurement task in the re-input configuration is set in the field of time measurement.

### Contents Stored in Threshold Table 900

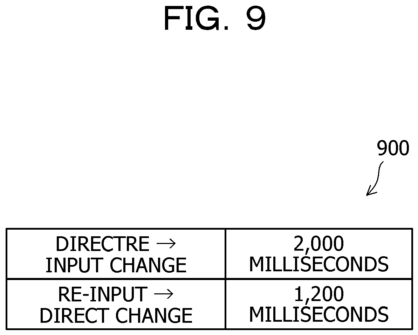

Next, an example of the contents stored in a threshold table 900 will be described with reference to FIG. 9. The threshold table 900 is implemented by, for example, a storage area such as the memory 502, the recording medium 505, or the like of the control device 101 illustrated in FIG. 5.

FIG. 9 is an explanatory diagram illustrating an example of the contents stored in the threshold table 900. As illustrated in FIG. 9, the threshold table 900 has fields of direct→re-input change and re-input→direct change. The threshold table 900 stores threshold information by setting information in each field.

A first threshold used to determine whether to change the connection configuration of the stream processing infrastructure 200 from the direct configuration to the re-input configuration is set in the field of direct→re-input change. A second threshold used to determine whether to change the connection configuration of the stream processing infrastructure 200 from the re-input configuration to the direct configuration is set in the field of re-input→direct change.

Here, when the first threshold is equal to the second threshold, there is a relatively high probability that the waiting time will be less than the second threshold immediately after the waiting time becomes equal to or more than the first threshold. Therefore, the switching frequency of the connection configuration of the stream processing infrastructure 200 tends to increase. Then, the burden on the arithmetic device 103 is increased. For this reason, it is preferable that the first threshold be larger than the second threshold, for example.

### Example of Hardware Configuration of Storage Device 102

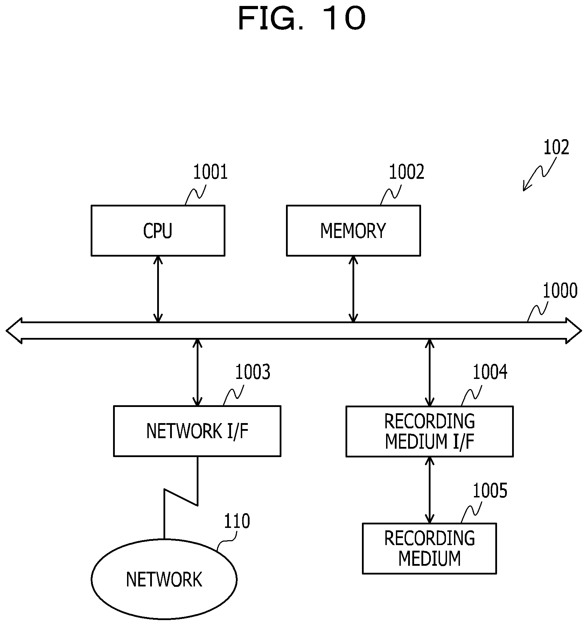

Next, an example of the hardware configuration of the storage device 102 will be described with reference to FIG. 10.

FIG. 10 is a block diagram illustrating an example of the hardware configuration of the storage device 102. In FIG. 10, the storage device 102 includes a CPU 1001, a memory 1002, a network I/F 1003, a recording medium I/F 1004, and a recording medium 1005, which are interconnected by a bus 1000. The CPU 1001 to the recording medium 1005 included in the storage device 102 are the same as the CPU 501 to the recording medium 505 included in the control device 101 illustrated in FIG. 5, and therefore, explanation thereof will not be repeated.

The storage device 102 may include, for example, a keyboard, a mouse, a display, a printer, a scanner, a microphone, a speaker, etc., in addition to the above-described components. Further, the storage device 102 may include a plurality of recording medium I/Fs 1004 and recording media 1005. Further, the storage device 102 may not have the recording medium I/F 1004 or the recording medium 1005.

### Example of Hardware Configuration of Arithmetic Device 103

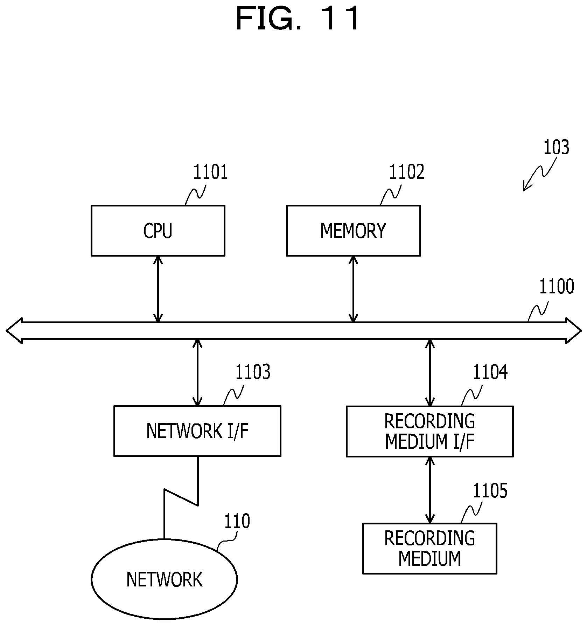

Next, an example of the hardware configuration of the arithmetic device 103 will be described with reference to FIG. 11.

FIG. 11 is a block diagram illustrating an example of the hardware configuration of the arithmetic device 103. In FIG. 11, the arithmetic device 103 includes a CPU 1101, a memory 1102, a network I/F 1103, a recording medium I/F 1104, and a recording medium 1105, which are interconnected by a bus 1100. The CPU 1101 to the recording medium 1105 included in the arithmetic device 103 are the same as the CPU 501 to the recording medium 505 included in the control device 101 illustrated in FIG. 5 and therefore, explanation thereof will not be repeated.

The arithmetic device 103 may include, for example, a keyboard, a mouse, a display, a printer, a scanner, a microphone, a speaker, etc., in addition to the above-described components. Further, the arithmetic device 103 may include a plurality of recording medium I/Fs 1104 and recording media 1105. The arithmetic device 103 may not have the recording medium I/F 1104 or the recording medium 1105.

### Contents Stored in Internal State Table 1200

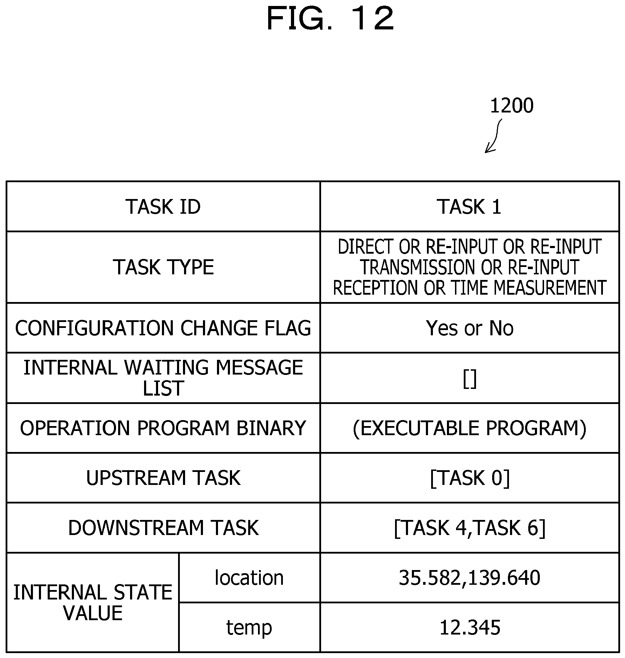

Next, an example of the contents stored in an internal state table 1200 will be described with reference to FIG. 12. The internal state table 1200 is implemented by, for example, a storage area such as the memory 502, the recording medium 505, or the like of the control device 101 illustrated in FIG. 5.

FIG. 12 is an explanatory diagram illustrating an example of the stored contents of the internal state table 1200. As illustrated in FIG. 12, the internal state table 1200 includes fields of task ID, task type, configuration change flag, internal waiting message list, operation program binary, upstream task, downstream task, and internal state value. The internal state table 1200 stores internal state information as a record by setting information in each field for each task 202.

A task ID is set in the field of task ID. Information indicating whether the task type is a direct transmission task, a re-input task, a re-input transmission task, a re-input reception task, or a time measurement task is set in the field of task type. A flag indicating whether or the configuration is being changed is set in the field of configuration change flag. A list that collects temporarily held messages is set in the field of internal waiting message list.

An executable program to be the task 202 is set in the field of operation program binary. A task name of an upstream task is set in the field of upstream task. A task name of a downstream task is set in the field of downstream task. An internal state value is set in the field of internal state value. The internal state values are location and temp. The location is a position. The temp is a temperature.

### Example of Functional Configuration of Information Processing System 100

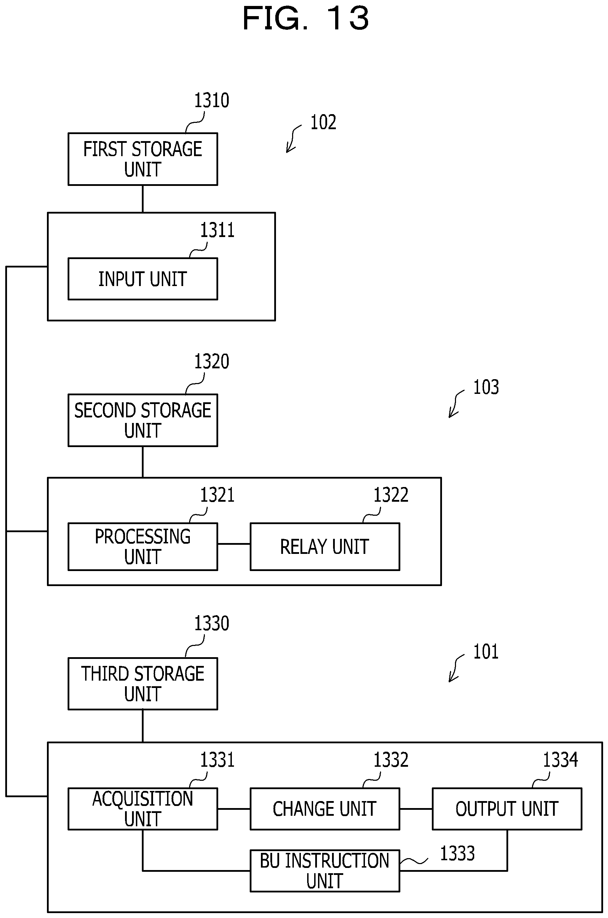

Next, an example of the functional configuration of the information processing system 100 in which data is processed in a stream processing format will be described with reference to FIG. 13.

FIG. 13 is a block diagram illustrating an example of the functional configuration of the information processing system 100. The information processing system includes a control device 101, a plurality of storage devices 102 that implement a plurality of data stores 201, and a plurality of arithmetic devices 103 that implement a plurality of processing units 1321.

Each of the processing units 1321 is a functional unit that implements the task. The functional unit that implements the task may be, for example, the arithmetic device 103 itself. The information processing system 100 includes at least a first arithmetic device 103, a second arithmetic device 103, a third arithmetic device 103, a fourth arithmetic device 103, and a fifth arithmetic device 103.

Here, the plurality of storage devices 102 implement, for example, at least a first data store 201, a second data store 201, and a third data store 201. Further, the plurality of arithmetic devices 103 implement, for example, at least a first processing unit 1321, a second processing unit 1321, a first relay unit 1322, and a second relay unit 1322.

In the information processing system 100, each storage device 102 includes a first storage unit 1310 and an input unit 1311. The first storage unit 1310 is implemented by, for example, a storage area such as the memory 1002, the recording medium 1005, or the like illustrated in FIG. 10. A case where the first storage unit 1310 is included in the storage device 102 will be described below, but the present disclosure is not limited thereto. For example, the first storage unit 1310 may be included in a device different from the storage device 102, and the stored contents of the first storage unit 1310 may be referred to by the storage device 102.

The input unit 1311 functions as an example of a controller of the storage device 102. Specifically, the input unit 1311 implements its function by, for example, causing the CPU 1001 to execute a program stored in a storage area such as the memory 1002, the recording medium 1005, or the like illustrated in FIG. 10, or by the network I/F 1003. The processing result of the input unit 1311 is stored in, for example, a storage area such as the memory 1002, the recording medium 1005, or the like illustrated in FIG. 10.

The first storage unit 1310 stores a variety of information that is referred to or updated in a process of the input unit 1311. The first storage unit 1310 stores, for example, data to be output.

The input unit 1311 acquires a variety of information. The input unit 1311 stores the acquired variety of information in the first storage unit 1310, or outputs the information. Further, the input unit 1311 may output the variety of information stored in the first storage unit 1310. The input unit 1311 acquires the variety of information based on, for example, a user's operation input. The input unit 1311 may receive a variety of information from, for example, a device different from the storage device 102.

The input unit 1311 acquires data from, for example, a data source and stores the data in the first storage unit 1310. The input unit 1311 acquires data from, for example, the arithmetic device 103 and stores the data in the first storage unit 1310. The input unit 1311 outputs, for example, data to be output, which is stored in a storage unit, to a path to the arithmetic device 103.

Specifically, when the storage device 102 implements the first data store 201, the input unit 1311 outputs data to a path connected to the first processing unit 1321. Specifically, when the storage device 102 implements the second data store 201, the input unit 1311 outputs data to a path connected to the second processing unit 1321. Specifically, when the storage device 102 implements the third data store 201, the input unit 1311 transmits received data to a path to the second relay unit 1322 connected to the second processing unit 1321. The first, second relay units 1322 are implemented by, for example, the fourth, fifth arithmetic devices 103, respectively.

The input unit 1311 acquires, for example, various requests from the control device 101. The input unit 1311 outputs, for example, the various requests acquired from the control device 101 to a path to the arithmetic device 103. Specifically, when the storage device 102 implements the first data store 201, the input unit 1311 outputs various requests to a path connected to the first processing unit 1321. Specifically, when the storage device 102 implements the second data store 201, the input unit 1311 outputs various requests to a path connected to the second processing unit 1321. Specifically, when the storage device 102 implements the third data store 201, the input unit 1311 transmits received various requests to a path to the second relay unit 1322 connected to the second processing unit 1321.

Specifically, the input unit 1311 acquires and outputs an output request to output a barrier marker, from the control device 101 by receiving the output request. The barrier marker is a message instructing the backup of the internal state. The barrier marker is output from any one of the plurality of data stores 201 and then is discarded without being input to another data store 201 different from any one of the data stores 201.

Specifically, the input unit 1311 acquires and outputs a switching request to switch the output destination of the processing unit 1321. More specifically, the input unit 1311 acquires and outputs the output destination of the first processing unit 1321 by receiving a switching request to switch to the second processing unit 1321. More specifically, the input unit 1311 acquires and outputs the output destination of the first processing unit 1321 by receiving a switching request to switch to the first relay unit 1322.

Specifically, the input unit 1311 acquires and outputs a movement request to move the task 202 between the arithmetic devices 103. The movement is to change the arithmetic device 103 that executes the task 202. More specifically, the input unit 1311 acquires and outputs the first task 202 by receiving a movement request to move the first task 202 from the first arithmetic device 103 to the third arithmetic device 103. More specifically, the input unit 1311 acquires and outputs the first task 202 by receiving a movement request to move the first task 202 from the third arithmetic device 103 to the first arithmetic device 103.

Specifically, when the storage device 102 implements the third data store 201, the input unit 1311 receives and acquires processing information that defines the processing contents of the first task 202. The processing information defines, for example, the processing contents of the first task 202. Specifically, when the storage device 102 implements the third data store 201, the input unit 1311 transmits received processing information to a path to the second relay unit 1322 connected to the second processing unit 1321.

The input unit 1311 may receive a start trigger for starting a process of the input unit 1311. The start trigger is, for example, that a user has input a predetermined operation. The start trigger may be, for example, reception of predetermined information from another computer. The start trigger is, for example, reception of data from a data source. The start trigger is, for example, reception of various requests from the control device 101.

In the information processing system 100, the arithmetic device 103 includes a second storage unit 1320 and a processing unit 1321 or a relay unit 1322. The second storage unit 1320 is implemented by, for example, a storage area such as the memory 1102, the recording medium 1105, or the like illustrated in FIG. 11. A case where the second storage unit 1320 is included in the arithmetic device 103 will be described below, but the present disclosure is not limited thereto. For example, the second storage unit 1320 may be included in a device different from the arithmetic device 103, and the stored contents of the second storage unit 1320 may be referred to by the arithmetic device 103.

The processing unit 1321 or the relay unit 1322 functions as an example of a controller of the arithmetic device 103. Specifically, the processing unit 1321 and the relay unit 1322 implement their functions by, for example, causing the CPU 1101 to execute a program stored in a storage area such as the memory 1102, the recording medium 1105, or the like illustrated in FIG. 11, or by the network I/F 1103.

Specifically, the processing unit 1321 operates as either the first processing unit 1321 or the second processing unit 1321. Specifically, the relay unit 1322 operates as either the first relay unit 1322 or the second relay unit 1322. The processing results of the processing unit 1321 and the relay unit 1322 are stored in, for example, a storage area such as the memory 1102, the recording medium 1105, or the like illustrated in FIG. 11.

The second storage unit 1320 stores a variety of information that is referred to or updated in the process of the processing unit 1321 or the relay unit 1322. The second storage unit 1320 stores, for example, data to be output. The second storage unit 1320 stores, for example, the internal state of the processing unit 1321. Specifically, the second storage unit 1320 stores the internal state of the task 202. More specifically, the second storage unit 1320 stores the internal state table 1200.

The processing unit 1321 acquires a variety of information. The processing unit 1321 stores the acquired variety of information in the second storage unit 1320, or outputs the information. In addition, the processing unit 1321 may output the variety of information stored in the second storage unit 1320. The processing unit 1321 acquires the variety of information based on, for example, a user's operation input. The processing unit 1321 may receive a variety of information from, for example, a device different from the arithmetic device 103.

The processing unit 1321 acquires data from, for example, the storage device 102 or from other arithmetic device 103, and stores the data in the first storage unit 1310. The processing unit 1321 outputs, for example, data to be output, which is stored in the first storage unit 1310, to a path to the arithmetic device 103.

The processing unit 1321 acquires a barrier marker from, for example, the storage device 102 or from other arithmetic device 103. The processing unit 1321 performs the backup of the internal state in response to receiving barrier markers as many as the number of paths through which data is input. For example, the processing unit 1321 outputs the barrier markers to the respective paths to which data is output, in response to receiving barrier markers as many as the number of paths to which data is input.

The processing unit 1321 acquires various requests from, for example, the storage device 102 or from other arithmetic device 103. Specifically, the processing unit 1321 acquires and outputs a switching request to switch the output destination of the processing unit 1321. More specifically, the processing unit 1321 acquires and outputs the output destination of the first processing unit 1321 by receiving a switching request to switch to the second processing unit 1321. When the processing unit 1321 operates as the first processing unit 1321, a switching request to switch the output destination of the first processing unit 1321 to the second processing unit 1321 is input from the second relay unit 1322. Then, after the switching request is input, the processing unit 1321 switches the output destination of the first processing unit 1321 from the first relay unit 1322 to the second processing unit 1321.

More specifically, the processing unit 1321 acquires and outputs the output destination of the first processing unit 1321 by receiving a switching request to switch to the first relay unit 1322. When the processing unit 1321 operates as the first processing unit 1321, the switching request to switch the output destination of the first processing unit 1321 to the first relay unit 1322 is input from the second relay unit 1322. Then, after the switching request is input, the processing unit 1321 switches the output destination of the first processing unit 1321 from the first relay unit 1322 to the second processing unit 1321.

The processing unit 1321 implements a data process. The processing unit 1321 performs, for example, the data process of the task 202 and outputs data of the processing result. The first processing unit 1321 is, for example, the first task 202 that is executed by the first arithmetic device 103 and performs a predetermined data process, and performs the data process of the first task 202. The first processing unit 1321 may be executed by the third arithmetic device 103. The second processing unit 1321 is, for example, the second task 202 that is executed by the second arithmetic device 103 and performs a predetermined data process, and performs the data process of the second task 202.

When a movement request is received in the first arithmetic device 103, the processing unit 1321 stores data received after the movement request. The movement request is a request to move the first task 202 from the first arithmetic device 103 to the third arithmetic device 103. When the request is received in the third arithmetic device 103, the processing unit 1321 ends the first task 202. When the processing information is received, the processing unit 1321 implements the data process of the first task 202 based on the received processing information.

The processing unit 1321 outputs, for example, the acquired various requests to a path to the arithmetic device 103. Specifically, the processing unit 1321 outputs the various requests to a path connected to the first processing unit 1321. Specifically, the processing unit 1321 outputs the various requests to a path connected to the second processing unit 1321.

When the processing unit 1321 operates as the first processing unit 1321 in the first arithmetic device 103, the processing unit 1321 transmits data of the processing result of the first task 202 to a path to the second arithmetic device 103. When the processing unit 1321 does not operate as the first processing unit 1321 in the first arithmetic device 103, the processing unit 1321 transmits the received data to a path to the third arithmetic device 103.

When the processing unit 1321 operates as the first processing unit 1321 in the third arithmetic device 103, the processing unit 1321 transmits data of the processing result of the first task 202 to a path to the third data store 201. The processing unit 1321 transmits the received data in the fourth arithmetic device 103 to a path to the second arithmetic device 103.

When a movement request is received in the first arithmetic device 103, the processing unit 1321 transmits the received request to a path to the third arithmetic device 103. The movement request is a request to move the first task 202 from the first arithmetic device 103 to the third arithmetic device 103.

When a movement request is received in the third arithmetic device 103, the processing unit 1321 transmits processing information defining the processing contents of the first task 202 to a path to the third data store 201. The movement request is a request to move the first task 202 from the third arithmetic device 103 to the first arithmetic device 103.

When the processing information is received in the first arithmetic device 103, the processing unit 1321 transmits data of the processing result of the first task 202 to a path to the second arithmetic device 103. The processing unit 1321 transmits the received processing information in the fourth arithmetic device 103 to a path to the first arithmetic device 103.

The relay unit 1322 acquires a variety of information. The relay unit 1322 stores the acquired variety of information in the second storage unit 1320, or outputs the information. Further, the relay unit 1322 may output the variety of information stored in the second storage unit 1320. The relay unit 1322 acquires the variety of information based on, for example, a user's operation input. The relay unit 1322 may receive a variety of information from, for example, a device different from the arithmetic device 103.

When the relay unit 1322 operates as the first relay unit 1322, the relay unit 1322 stores data input after the first switching request in the second storage unit 1320. The switching request is a request to switch the output destination of the first processing unit 1321 to the second processing unit 1321. When the relay unit 1322 operates as the first relay unit 1322, when a switching request is input from the second relay unit 1322 after the first switching request, the relay unit 1322 outputs the stored data to the second processing unit 1321. When the relay unit 1322 operates as the second relay unit 1322, the relay unit 1322 outputs the input switching request to the first processing unit 1321 and the first relay unit 1322.

The relay unit 1322 may receive a start trigger that starts a process of the relay unit 1322. The start trigger is, for example, that a user has input a predetermined operation. The start trigger may be reception of predetermined information from another computer, for example. The start trigger is, for example, reception of data from the storage device 102 or from other arithmetic device 103. The start trigger is, for example, reception of a barrier marker from the storage device 102 or from other arithmetic device 103. The start trigger is, for example, reception of various requests from the storage device 102 or from other arithmetic device 103.

In the information processing system 100, the control device 101 includes a third storage unit 1330, an acquisition unit 1331, a change unit 1332, a BU instruction unit 1333, and an output unit 1334. The third storage unit 1330 is implemented by, for example, a storage area such as the memory 502, the recording medium 505, or the like illustrated in FIG. 5. A case where the third storage unit 1330 is included in the control device 101 will be described below, but the present disclosure is not limited thereto. For example, the third storage unit 1330 may be included in a device different from the control device 101, and the stored contents of the third storage unit 1330 may be referred to by the control device 101.

The acquisition unit 1331 to the output unit 1334 functions as an example of a controller of the control device 101. Specifically, the acquisition unit 1331 to the output unit 1334 implement their functions by, for example, causing the CPU 501 to execute a program stored in a storage area such as the memory 502, the recording medium 505, or the like illustrated in FIG. 5, or by the network I/F 503. The processing result of each functional unit is stored in, for example, a storage area such as the memory 502, the recording medium 505, or the like illustrated in FIG. 5.

The third storage unit 1330 stores a variety of information that is referred to or updated in a process of each functional unit. The third storage unit 1330 stores the connection relationship between the arithmetic devices 103. The third storage unit 1330 stores, for example, the connection relationship between the tasks 202. The third storage unit 1330 stores the first threshold and the second threshold. The first threshold is larger than the second threshold, for example. Specifically, the third storage unit 1330 stores the connection configuration table 800 illustrated in FIG. 8 and the threshold table 900 illustrated in FIG. 9.

The acquisition unit 1331 acquires a variety of information used for a process of each functional unit. The acquisition unit 1331 stores the acquired variety of information in the third storage unit 1330 or outputs the information to each functional unit. Further, the acquisition unit 1331 may output the variety of information stored in the third storage unit 1330 to each functional unit. The acquisition unit 1331 acquires the variety of information based on, for example, a user's operation input. The acquisition unit 1331 may receive a variety of information from, for example, an apparatus different from the information processing system 100.

The acquisition unit 1331 acquires information about the waiting time until the processing unit 1321 receives barrier markers as many as the number of paths through which data is input to the processing unit 1321. The acquisition unit 1331 acquires, for example, information about the waiting time regarding the second processing unit 1321.

The acquisition unit 1331 may receive a start trigger for starting the process of any functional unit. The start trigger is, for example, that a user has a predetermined operation input. The start trigger may be, for example, reception of predetermined information from another computer. For example, the acquisition unit 1331 may periodically detect a timing of outputting a barrier marker to each data store 201.

The change unit 1332 determines whether or not the waiting time is equal to or more than the first threshold, based on acquired information. When it is determined that the waiting time is equal to or more than the first threshold, the change unit 1332 switches the connection configuration of the stream processing infrastructure 200 from the first configuration to the second configuration. The first configuration is a configuration in which the third data store 201 is not included on the path from the first processing unit 1321 to the second processing unit 1321. The second configuration is a configuration in which the third data store 201 is included on the path from the first processing unit 1321 to the second processing unit 1321.

A path from the first processing unit 1321 to the second processing unit 1321 in the first configuration and a path from the first processing unit 1321 including the third data store 201 to the second processing unit 1321 in the second configuration merge at the second processing unit 1321. The change unit 1332 may generate the third data store 201 when it is determined that the waiting time is equal to or more than the first threshold.

For example, when it is determined that the waiting time is equal to or more than the first threshold, the change unit 1332 switches the output destination of the first processing unit 1321 from the second processing unit 1321 to the first relay unit 1322 that outputs the input data. The first relay unit 1322 is included on a path from the first processing unit 1321 to the third data store 201. Specifically, when it is determined that the waiting time is equal to or more than the first threshold, the change unit 1332 outputs from the first data store 201 a switching request to switch the output destination of the first processing unit 1321 from the second processing unit 1321 to the first relay unit 1322.

For example, when it is determined that the waiting time is equal to or more the first threshold, the change unit 1332 may move the first task 202 from the first arithmetic device 103 to the third arithmetic device 103 that is able to execute the first task 202. Specifically, when it is determined that the waiting time is equal to or more than the first threshold, the change unit 1332 outputs from the first data store 201 a movement request to move the first task 202 from the first arithmetic device 103 to the third arithmetic device 103 that is able to execute the first task 202.

The change unit 1332 determines whether or not the waiting time is less than the second threshold, based on the acquired information. When it is determined that the waiting time is less than the second threshold, the change unit 1332 switches from the second configuration to the first configuration. When it is determined that the waiting time is less than the second threshold, the change unit 1332 switches the output destination of the first processing unit 1321 from the first relay unit 1322 to the second processing unit 1321. Specifically, when it is determined that the waiting time is less than the second threshold, the change unit 1332 outputs from the first data store.201 a switching request to switch the output destination of the first processing unit 1321 to the second processing unit 1321.

For example, when it is determined that the waiting time is less than the second threshold, the change unit 1332 may move the first task 202 from the third arithmetic device 103 to the first arithmetic device 103. For example, when it is determined that the waiting time is less than the second threshold, the change unit 1332 outputs from the first data store 201 a movement request to move the first task 202 from the third arithmetic device 103 to the first arithmetic device 103.

The BU instruction unit 1333 outputs a barrier marker from each of the plurality of data stores 201.

The output unit 1334 outputs the processing result of any functional unit. The output format is, for example, display on a display, print output to a printer, transmission to an external device by the network I/F 503, storage in a storage area such as the memory 502, the recording medium 505 or the like. As a result, the output unit 1334 may notify the user of the processing result of any functional unit, which may result in improvement of the convenience of the information processing system 100.

### Specific Example of Functional Configuration of Information Processing System 100

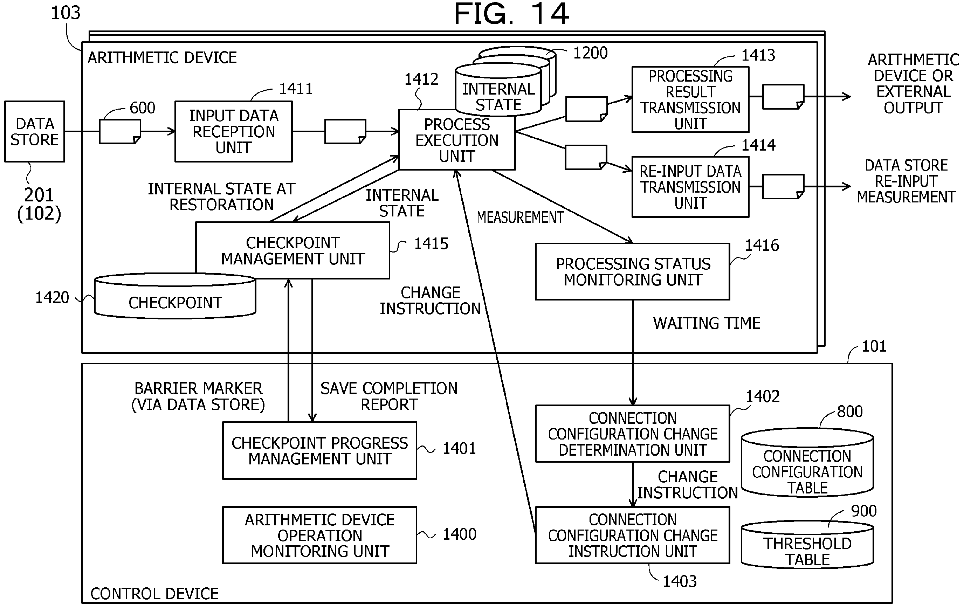

Next, a specific example of the functional configuration of the information processing system 100 will be described with reference to FIG. 14.

FIG. 14 is a block diagram illustrating a specific example of the functional configuration of the information processing system 100. In the information processing system 100, the arithmetic device 103 includes an input data reception unit 1411, a process execution unit 1412, an output data transmission unit 1413, a re-input data transmission unit 1414, a checkpoint management unit 1415, and a processing status monitoring unit 1416. Further, in the information processing system 100, the control device 101 includes an arithmetic device operation monitoring unit 1400, a checkpoint progress management unit 1401, a connection configuration change determination unit 1402, and a connection configuration change instruction unit 1403.

The input data reception unit 1411 receives a data message 600 from the data store 201 or from other arithmetic device 103. In addition, the input data reception unit 1411 receives various requests from the data store 201 or from other arithmetic device 103. Further, the input data reception unit 1411 receives processing information that defines the processing contents of the task 202, from other arithmetic device 103.

The process execution unit 1412 executes a predetermined data process based on the data message 600. The process execution unit 1412 controls the output data transmission unit 1413 to output data of the processing result to other arithmetic device 103. Alternatively, the process execution unit 1412 controls the re-input data transmission unit 1414 to output the data of the processing result to the data store 201. When barrier markers are received as many as the number of paths through which data is input, the process execution unit 1412 activates the checkpoint management unit 1415. When the barrier markers are received as many as the number of paths to which data is input, the process execution unit 1412 controls the output data transmission unit 1413 to output the barrier markers to other arithmetic device 103.

The process execution unit 1412 executes a process corresponding to the various requests. When the switching request or the movement request is received, the process execution unit 1412 controls the output data transmission unit 1413 or the re-input data transmission unit 1414 to transmit the switching request or the movement request to other arithmetic device 103 or the data store 201. When the switching request is received, the process execution unit 1412 controls the output data transmission unit 1413 or the re-input data transmission unit 1414 to switch the transmission destination. When the movement request is received, the process execution unit 1412 controls the output data transmission unit 1413 or the re-input data transmission unit 1414 to transmit the processing information defining the processing contents of the task 202 to other arithmetic device 103 or the data store 201 in order to move the task 202.

In addition, when the processing information is received, the process execution unit 1412 implements the task 202 based on the processing information. When the processing information is received, the process execution unit 1412 controls the output data transmission unit 1413 or the re-input data transmission unit 1414 to transmit the processing information to other arithmetic device 103 or the data store 201.

The output data transmission unit 1413 transmits the data of the processing result, the switching request or the movement request, the processing information, the barrier marker, or the like to other arithmetic device 103, an external computer, or the like under the control of the process execution unit 1412. The re-input data transmission unit 1414 transmits the data of the processing result, the switching request or the movement request, the processing information, or the like to the data store 201 under the control of the process execution unit 1412.

When activated, the checkpoint management unit 1415 saves the internal state table 1200 for each task 202, as a checkpoint 1420. After the internal state table 1200 for each task 202 is saved, the checkpoint management unit 1415 transmits a save completion report to the checkpoint progress management unit 1401. The processing status monitoring unit 1416 measures the waiting time of the barrier marker in the process execution unit 1412, and transmits the waiting time to the connection configuration change determination unit 1402.

The arithmetic device operation monitoring unit 1400 monitors a failure or the like of the arithmetic device 103 and detects a timing for restoring the stream processing infrastructure 200 from the failure. The checkpoint progress management unit 1401 outputs a barrier marker from each data store 201. In addition, the checkpoint progress management unit 1401 collects and manages backup progress information in each arithmetic device 103. For example, the checkpoint progress management unit 1401 collects the save completion report and manages the backup progress information in each arithmetic device 103.

Based on the threshold table 900, the connection configuration change determination unit 1402 determines whether or not the waiting time of the barrier marker in the process execution unit 1412 is equal to or more than the first threshold or less than the second threshold. For example, when the current connection configuration of the stream processing infrastructure 200 is the direct configuration, the connection configuration change determination unit 1402 determines whether or not the waiting time is equal to or more than the first threshold. In addition, for example, when the current connection configuration of the stream processing infrastructure 200 is the re-input configuration, the connection configuration change determination unit 1402 determines whether or not the waiting time is less than the second threshold.

When the current connection configuration of the stream processing infrastructure 200 is the direct configuration, and it is determined that the waiting time is equal to or more than the first threshold, the connection configuration change determination unit 1402 determines to change the connection configuration of the stream processing infrastructure 200 to the re-input configuration. Then, the connection configuration change determination unit 1402 outputs to the connection configuration change instruction unit 1403 a switching request or a movement request that is a change instruction to change to the re-input configuration.

When the current connection configuration of the stream processing infrastructure 200 is the re-input configuration, and it is determined that the waiting time is less than the second threshold, the connection configuration change determination unit 1402 determines to change the connection configuration of the stream processing infrastructure 200 to the direct configuration. Then, the connection configuration change determination unit 1402 outputs to the connection configuration change instruction unit 1403 a switching request or a movement request that is a change instruction to change to the direct configuration.

The connection configuration change instruction unit 1403 outputs from the data store 201 the switching request or the movement request that is a change instruction. The connection configuration change instruction unit 1403 updates the connection configuration table 800 according to the changed connection configuration of the stream processing infrastructure 200.

### Example 1 of Information Processing System 100

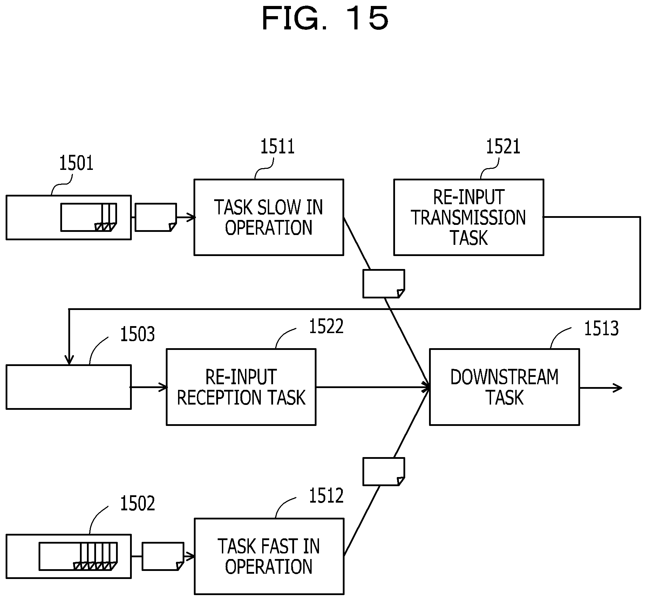

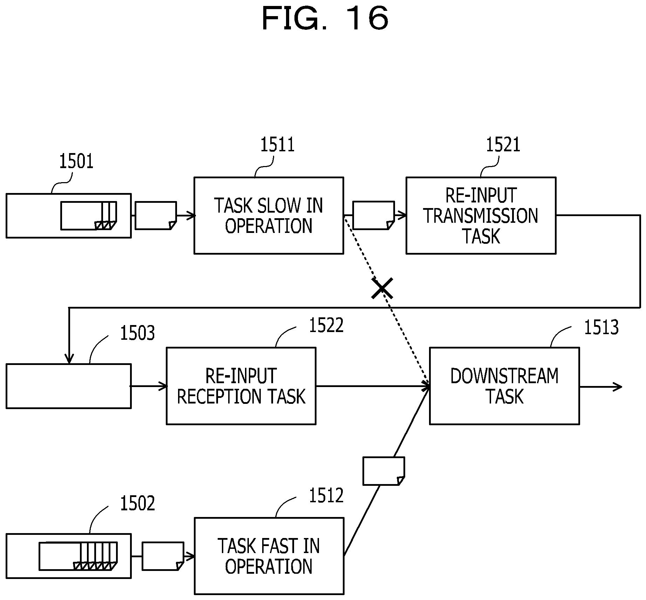

Next, Example 1 of the information processing system 100 will be described with reference to FIGs. 15 to 33. First, in Example 1, an example of changing the connection configuration of the stream processing infrastructure 200 from the direct configuration to the re-input configuration will be described with reference to FIGs. 15 and 16.

FIGs. 15 and 16 are explanatory diagrams illustrating an example of changing the connection configuration of the stream processing infrastructure 200 from the direct configuration to the re-input configuration in Example 1. In the example of FIGs. 15 and 16, there are data stores 1501 to 1503 and tasks 1511 to 1513, 1521, and 1522.

The task 1511 is a task that is relatively slow in operation. The task 1512 is a task that is relatively fast in operation. The task 1513 is a downstream task that receives data of the processing result of the task 1511 and data of the processing result of the task 1512. The task 1521 is a re-input transmission task. The task 1522 is a re-input reception task.

In FIG. 15, the connection configuration of the stream processing infrastructure 200 is a direct configuration. For example, the task 1511 directly transmits the data of the processing result of the task 1511 to the task 1513. Further, for example, the task 1512 directly transmits the data of the processing result of the task 1512 to the task 1513.

The control device 101 acquires the waiting time of a barrier marker in the task 1513. Here, it is assumed that the waiting time of the barrier marker in the task 1513 is equal to or more than the first threshold, and the control device 101 determines to change the connection configuration of the stream processing infrastructure 200 to a re-input configuration. Therefore, the control device 101 forms a connection from the task 1521 to the data store 1503, a connection from the data store 1503 to the task 1522, and a connection from the task 1522 to the task 1513. Next, descriptions will be made while referring to FIG. 16.

In FIG. 16, the control device 101 deletes a connection from the task 1511 to the task 1513 and forms a connection from the task 1511 to the task 1521 at a timing of outputting a barrier marker from the data stores 1501 to 1503.

As a result, the control device 101 may reduce the waiting time of the barrier marker in the task 1513. For example, since the barrier marker output from the data stores 1502 and 1503 may easily arrive at the task 1513, the control device 101 may reduce the waiting time of the barrier marker in the task 1513.

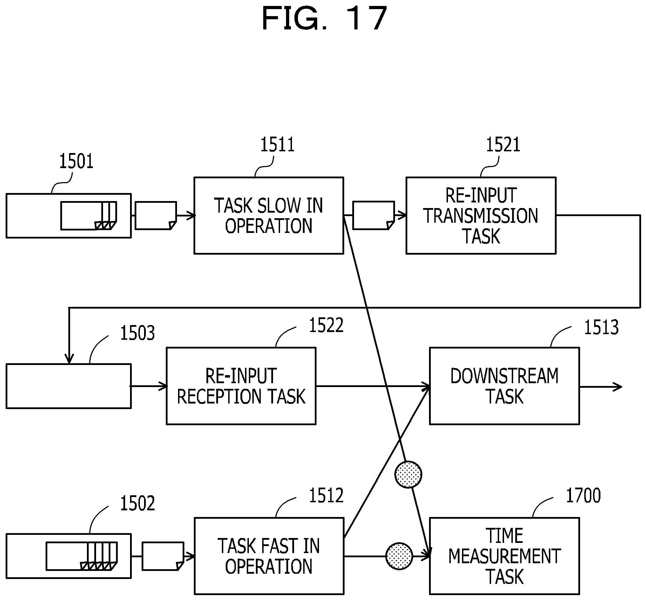

Next, in Example 1, an example of acquiring the waiting time of the barrier marker in the task 1513 at the time of direct configuration after changing to the re-input configuration will be described with reference to FIG. 17. In the example of FIG. 17, the waiting time of the barrier marker in the task 1513 at the time of direct configuration is acquired in the connection configuration of the stream processing infrastructure 200 illustrated in FIG. 16.

FIG. 17 is an explanatory diagram illustrating an example of acquiring the waiting time. In FIG. 17, since there is no connection from the task 1511 to the task 1513, the control device 101 may not directly acquire the waiting time of the barrier marker in the task 1513 at the time of direct configuration.

For this reason, the control device 101 prepares a time measurement task 1700 and creates a connection from the task 1511 to the time measurement task 1700 and a connection from the task 1512 to the time measurement task 1700. Then, the control device 101 acquires the waiting time of a barrier marker in the time measurement task 1700 as the waiting time of the barrier marker in the task 1513 at the time of direct configuration.

Accordingly, the control device 101 will determine whether to change the connection configuration of the stream processing infrastructure 200 from the re-input configuration to the direct configuration. For example, the control device 101 will measure the processing loads of the tasks 1511 and 1512 and estimate the waiting time based on the processing loads of the tasks 1511 and 1512. Further, for example, the control device 101 may measure the data transmission/reception interval between the task 1511 and the task 1512 and estimate the waiting time based on the data transmission/reception interval between the task 1511 and the task 1512.

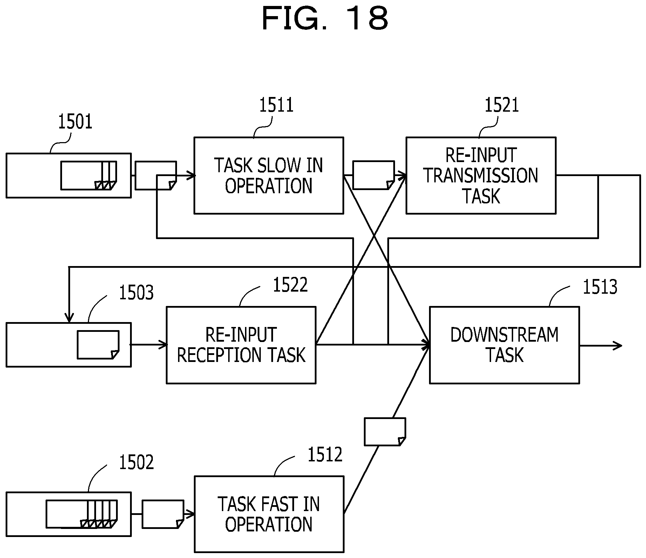

Next, in Example 1, an example of changing the connection configuration of the stream processing infrastructure 200 from the re-input configuration to the direct configuration will be described with reference to FIGs. 18 to 23. In the example of FIGs. 18 to 23, the connection configuration of the stream processing infrastructure 200 illustrated in FIG. 16 is changed from the re-input configuration to the direct configuration.

FIGs. 18 to 23 are explanatory diagrams illustrating an example of changing the connection configuration of the stream processing infrastructure 200 from the re-input configuration to the direct configuration in Example 1. In FIG. 18, since the waiting time of the barrier marker in the task 1513 at the time of direct configuration is less than the second threshold, the control device 101 determines to change the connection configuration of the stream processing infrastructure 200 from the re-input configuration to the direct configuration.

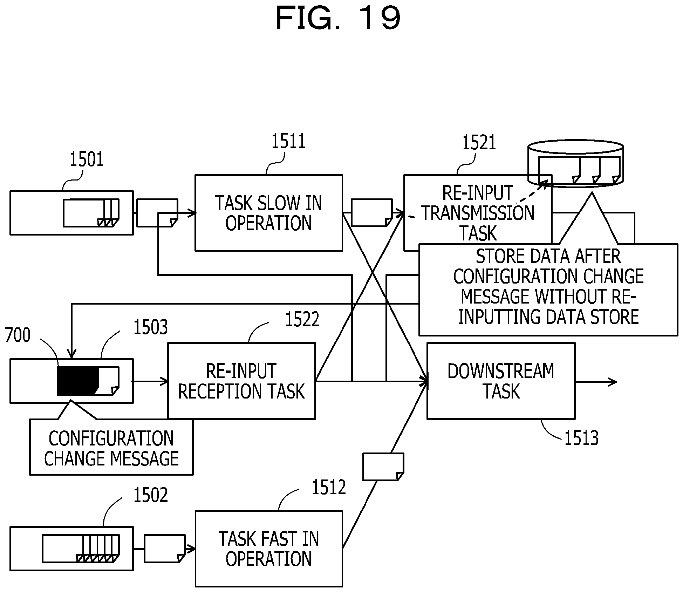

Here, the control device 101 creates a connection from the task 1511 to the task 1513, a connection from the task 1521 to the task 1513, a connection from the task 1522 to the task 1511, and a connection from the task 1522 to the task 1521. Next, descriptions will be made while referring to FIG. 19.

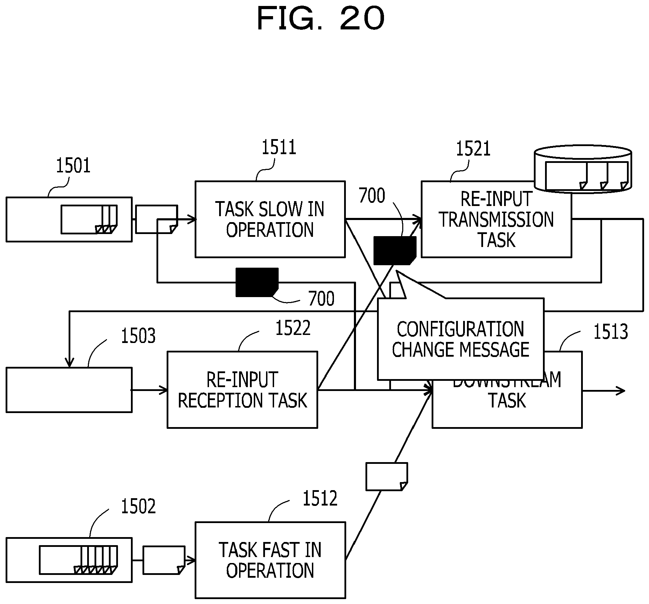

In FIG. 19, the control device 101 outputs a configuration change message 700 from the data store 1501. The configuration change message 700 reaches the task 1521 via the task 1511. The task 1521 stores data after the configuration change message 700 without re-inputting the data store 1503, and transmits the configuration change message 700 to the data store 1503. Next, descriptions will be made while referring to FIG. 20.

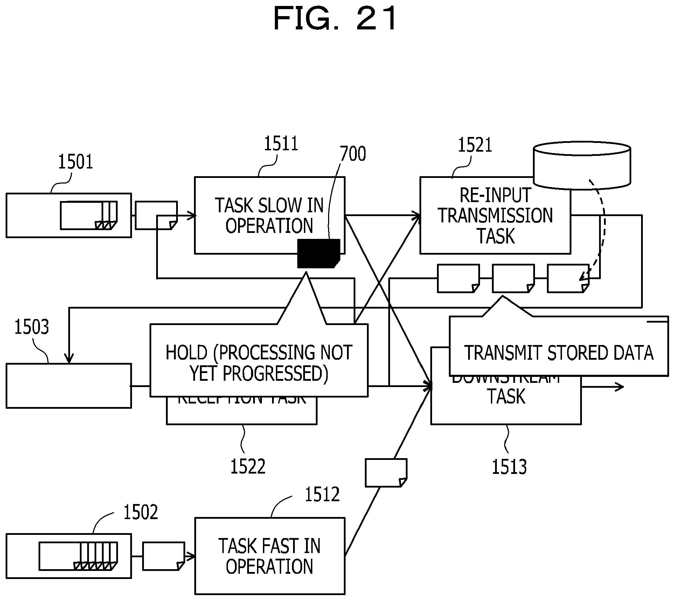

In FIG. 20, the data store 1503 transmits the configuration change message 700 to the task 1522 without overtaking data before the configuration change message 700. The task 1522 transmits to the tasks 1511 and 1521 the configuration change message 700 received from the data store 1503. Next, descriptions will be made while referring to FIG. 21.

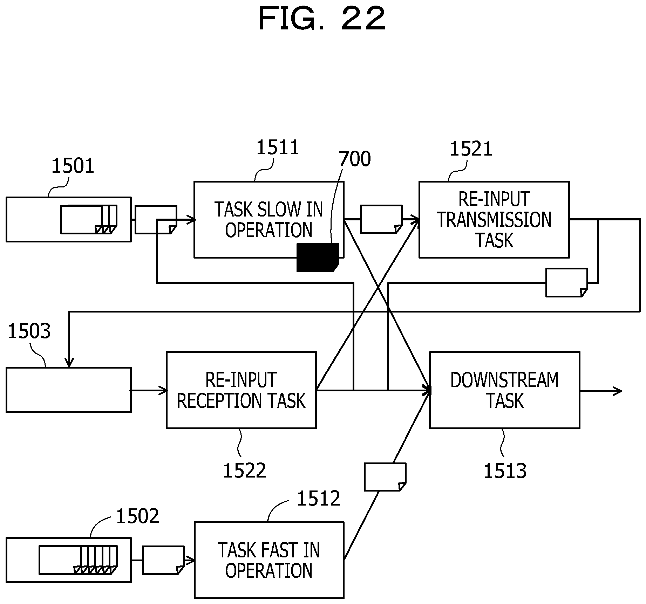

In FIG. 21, the task 1511 holds the configuration change message 700. The task 1521 sequentially transmits the stored data to the task 1513. Here, since the data store 1503 prevents the configuration change message 700 from overtaking the data before the configuration change message 700, the data order is secured even when the task 1521 transmits the stored data. Next, descriptions will be made while referring to FIG. 22.

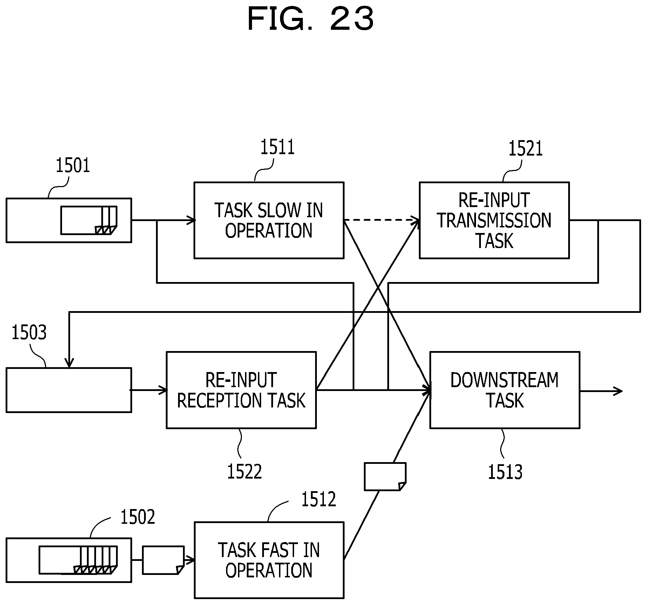

In FIG. 22, the stream processing infrastructure 200 is operated so that data is transmitted from the task 1511 to the task 1513 via the task 1521 until the barrier marker is output from the data store 1501. Next, descriptions will be made while referring to FIG. 23.

In FIG. 23, when the barrier marker is received, the task 1511 switches the transmission destination to the task 1513 based on the configuration change message 700. Since the data after the barrier marker does not overtake the data before the barrier marker, the data order is secured. After that, the control device 101 may remove the tasks 1521 and 1522.

Accordingly, the control device 101 may change the connection configuration of the stream processing infrastructure 200 from the re-input configuration to the direct configuration while ensuring the data order. Therefore, when it is determined that the waiting time of the barrier marker in the task 1513 at the time of direct configuration is relatively short, the control device 101 may prevent the processing delay caused by re-inputting data into the data store 1503.

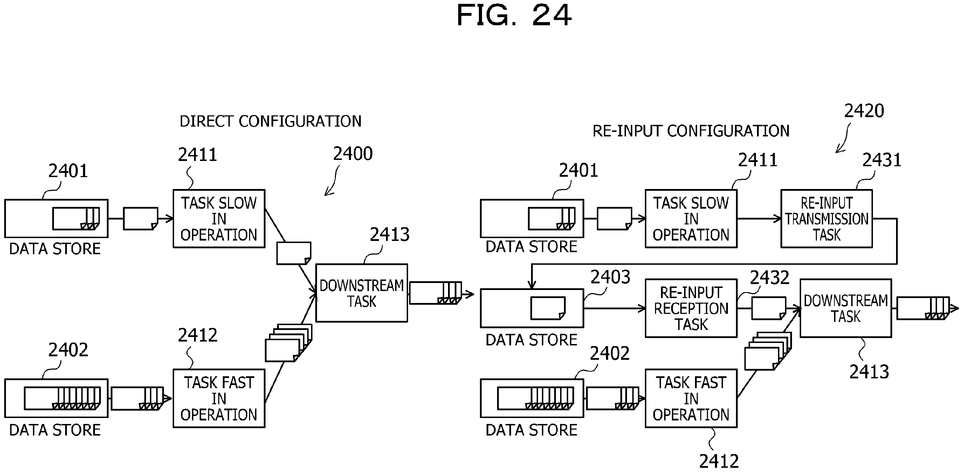

Next, an example of comparing the processing delay in the direct configuration and the processing delay in the re-input configuration will be described with reference to FIGs. 24 to 27.

FIGs. 24 to 27 are explanatory diagrams illustrating an example of comparing the processing delay in the direct configuration with the processing delay in the re-input configuration. The example of FIG. 24 illustrates a direct configuration 2400 and a re-input configuration 2420 of the stream processing infrastructure 200. The tasks common to the direct configuration 2400 and the re-input configuration 2420 are denoted by the same reference numerals.

The direct configuration 2400 includes data stores 2401 and 2402 and tasks 2411 to 2413. The task 2411 is a task that is relatively slow in operation. The task 2412 is a task that is relatively fast in operation. The task 2413 is a downstream task that receives data of the processing result of the task 2411 and data of the processing result of the task 2412. In the direct configuration 2400, there is a connection from the data store 2401 to the task 2411, a connection from the data store 2402 to the task 2412, a connection from the task 2411 to the task 2413, and a connection from the task 2412 to the task 2413.

The re-input configuration 2420 includes data stores 2401 to 2403, tasks 2411 to 2413, and tasks 2431 and 2432. The task 2431 is a re-input transmission task. The task 2432 is a re-input reception task.

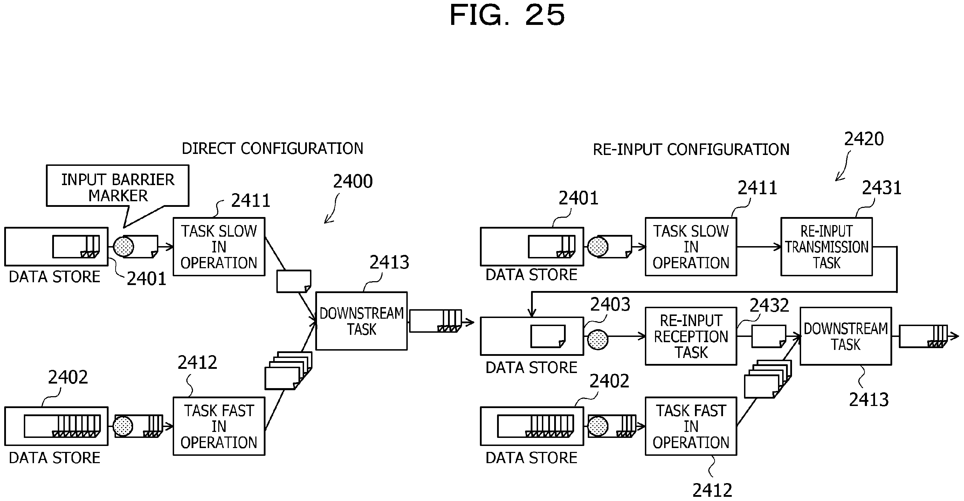

In the re-input configuration 2420, there are a connection from the data store 2401 to the task 2411, a connection from the task 2411 to the task 2431, and a connection from the task 2431 to the data store 2403. In addition, there is a connection from the data store 2403 to the task 2432 and a connection from the task 2432 to the task 2413. Further, there is a connection from the data store 2402 to the task 2412 and a connection from the task 2412 to the task 2413. Next, descriptions will be made while referring to FIG. 25.

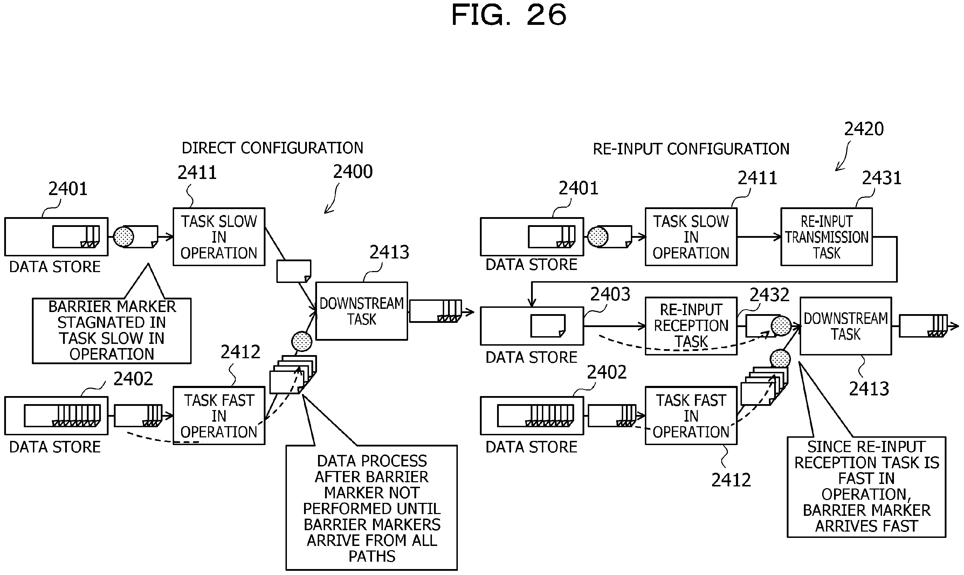

In FIG. 25, it is assumed that in the direct configuration 2400, barrier markers are output from the data stores 2401 and 4022, and in the re-input configuration 2420, barrier markers are output from the data stores 2401 to 2403. Next, descriptions will be made while referring to FIG. 26.

In FIG. 26, the barrier marker propagates over time. In both the direct configuration 2400 and the re-input configuration 2420, since the task 2411 is relatively slow in operation, the propagation of the barrier marker is stagnated in the task 2411.

For this reason, in the direct configuration 2400, even when the task 2413 receives the barrier marker output by the data store 2402, the task 2413 waits until the task 2413 receives the barrier marker output by the data store 2401 without performing a predetermined data process. As a result, the direct configuration 2400 results in increase of the waiting time of the barrier marker at the task 2413.

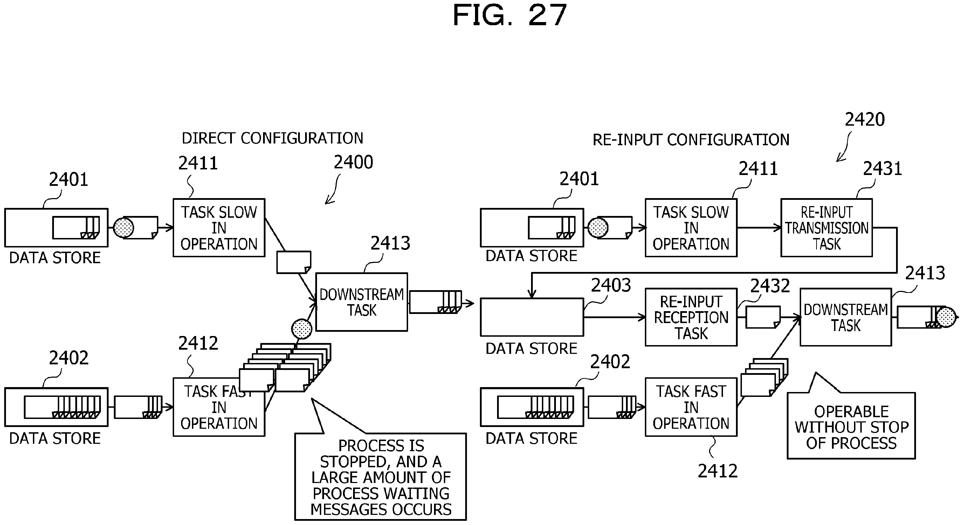

In contrast, in the re-input configuration 2420, the task 2413 may receive the barrier marker output by the data store 2402 and the barrier marker output by the data store 2403, so that the predetermined data process may be performed relatively early. Therefore, the re-input configuration 2420 may suppress an increase in the waiting time of the barrier marker. Next, descriptions will be made while referring to FIG. 27.

In FIG. 27, the direct configuration 2400 causes an increase in the waiting time of the barrier marker in the task 2413, which causes the processing delay for data after the barrier marker output by the data store 2402. Meanwhile, the re-input configuration 2420 may suppress the processing delay for the data after the barrier marker output by the data store 2402 in the task 2413.

### Overall Processing Procedure in Example 1

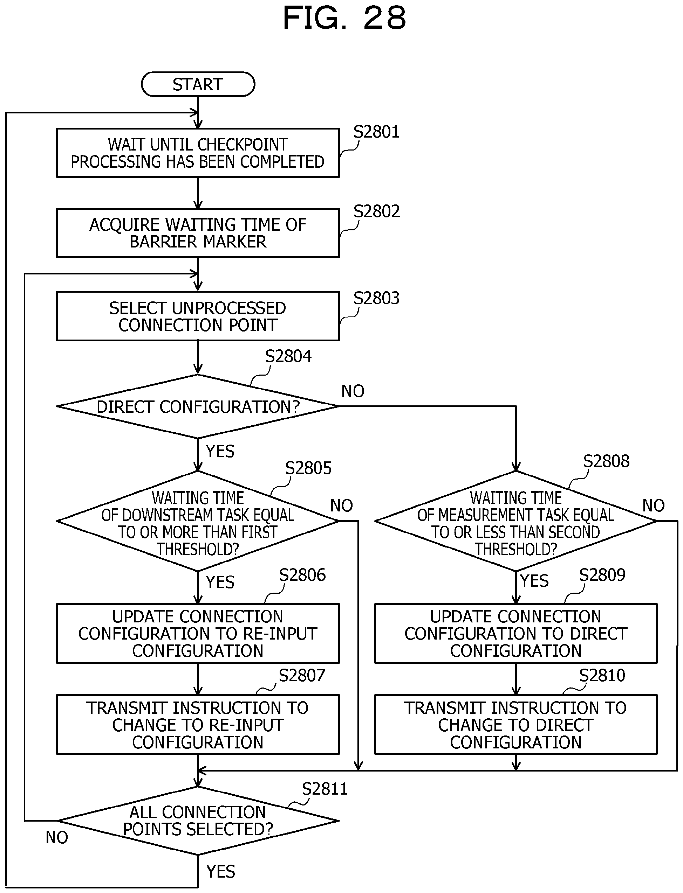

Next, an example of the overall processing procedure in Example 1 executed by the control device 101 will be described with reference to FIG. 28. The overall processing is implemented by, for example, the CPU 501, a storage area such as the memory 502, the recording medium 505, or the like, and the network I/F 503 illustrated in FIG. 5.

FIG. 28 is a flowchart illustrating an example of the overall processing procedure in Example 1. In FIG. 28, the control device 101 waits until a checkpoint processing is completed (operation S2801).

Next, the control device 101 acquires the waiting time of a barrier marker (operation S2802). Then, the control device 101 selects an unprocessed connection point (operation S2803).

Next, the control device 101 determines whether or not the connection type of the connection configuration of the selected connection point is the direct configuration (operation S2804). Here, in the case of the direct configuration (Yes in operation S2804), the control device 101 proceeds to the processing of operation S2805. Meanwhile, in the case of the re-input configuration rather than the direct configuration (No in operation S2804), the control device 101 proceeds to the processing of operation S2808.

In operation S2805, the control device 101 determines whether or not the waiting time of the downstream task is equal to or more than the first threshold (operation S2805). Here, when it is determined that the waiting time is equal to or more than the first threshold (Yes in operation S2805), the control device 101 proceeds to the processing of operation S2806. Meanwhile, when it is determined that the waiting time is not equal to or more than the first threshold (No in operation S2805), the control device 101 proceeds to the processing of operation S2811.

In operation S2806, the control device 101 updates the connection configuration to the re-input configuration (operation S2806). Next, the control device 101 transmits an instruction to change to the re-input configuration (operation S2807). The instruction to change to the re-input configuration is, for example, a configuration change message. Then, the control device 101 proceeds to the processing of operation S2811.

In operation S2808, the control device 101 determines whether or not the waiting time of the measurement task is equal to or less than the second threshold (operation S2808). Here, when it is determined that the waiting time is equal to or less than the second threshold (Yes in operation S2808), the control device 101 proceeds to the processing of operation S2809. Meanwhile, when it is determined that the waiting time is not equal to or less than the second threshold (No in operation S2808), the control device 101 proceeds to the processing of operation S2811.

In operation S2809, the control device 101 updates the connection configuration to the direct configuration (operation S2809). Next, the control device 101 transmits an instruction to change to the direct configuration (operation S2810). The instruction to change to the direct configuration is, for example, a configuration change message. Then, the control device 101 proceeds to the processing of operation S2811.

In operation S2811, the control device 101 determines whether or not all the connection points have been selected (operation S2811). When it is determined that there is an unselected connection point (No in operation S2811), the control device 101 returns to the processing of operation S2803. When it is determined that all the connection points have been selected (Yes in operation S2811), the control device 101 returns to the processing of operation S2801.

### Change Instruction Processing Procedure in Example 1

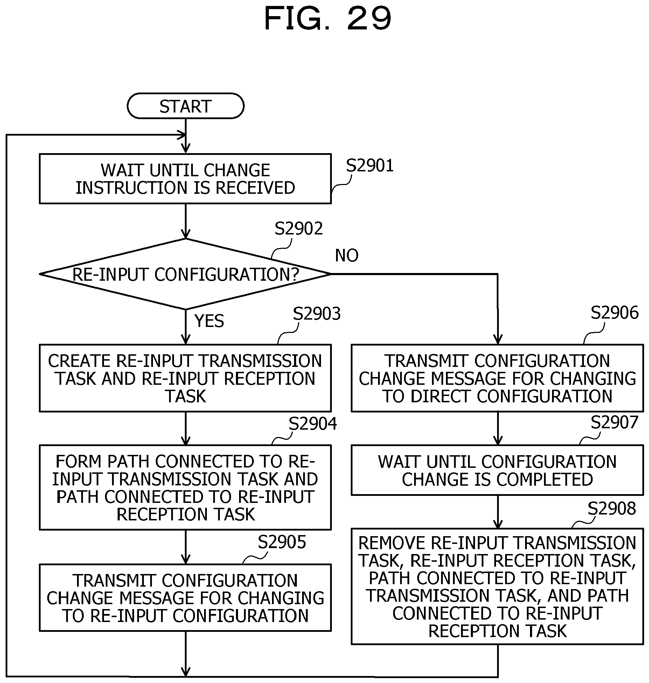

Next, an example of the change instruction processing procedure in Example 1 executed by the control device 101 will be described with reference to FIG. 29. The change instruction processing is implemented by, for example, the CPU 501, a storage area such as the memory 502, the recording medium 505, or the like, and the network I/F 503 illustrated in FIG. 5.

FIG. 29 is a flowchart illustrating an example of the change instruction processing procedure in Example 1. In FIG. 29, the control device 101 waits until a change instruction is received (operation S2901).

Next, the control device 101 determines whether or not the type of the change instruction is a re-input configuration (operation S2902). Here, when it is determined that the type of the change instruction is the re-input configuration (Yes in operation S2902), the control device 101 proceeds to the processing of operation S2903. Meanwhile, when it is determined that the type of the change instruction is not the re-input configuration (No in operation S2902), the control device 101 proceeds to the processing of operation S2906.

In operation S2903, the control device 101 creates a re-input transmission task and a re-input reception task (operation S2903). Next, the control device 101 forms a path connected to the re-input transmission task and a path connected to the re-input reception task (operation S2904). Then, the control device 101 transmits a configuration change message 700 for changing to the re-input configuration (operation S2905). Then, the control device 101 returns to the processing of operation S2901.

In operation S2906, the control device 101 transmits a configuration change message 700 for changing to the direct configuration (operation S2906). Next, the control device 101 waits until the configuration change is completed (operation S2907). Then, the control device 101 removes the re-input transmission task, the re-input reception task, the path connected to the re-input transmission task, and the path connected to the re-input reception task (operation S2908). Then, the control device 101 returns to the processing of operation S2901.

### Task Processing Procedure in Example 1

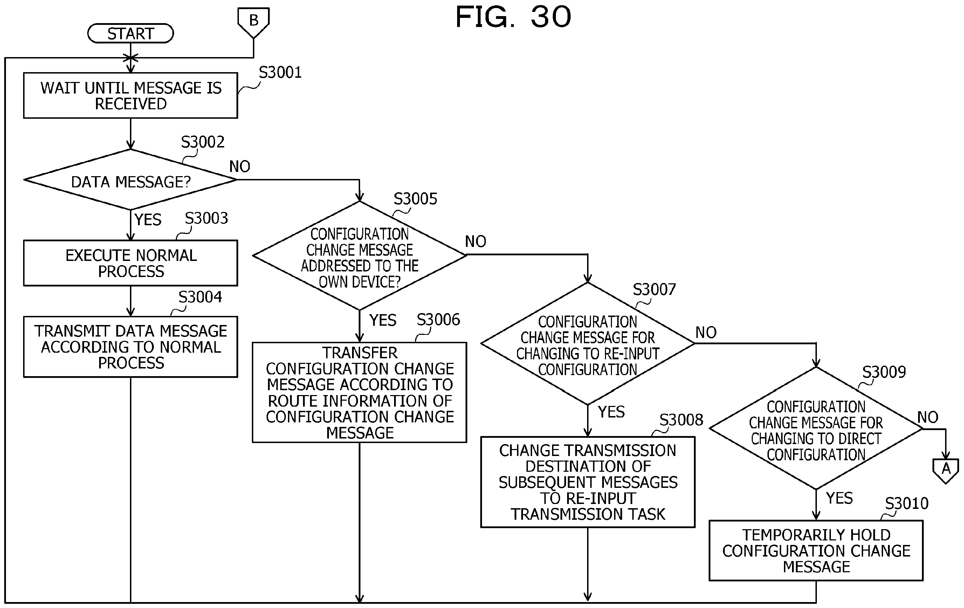

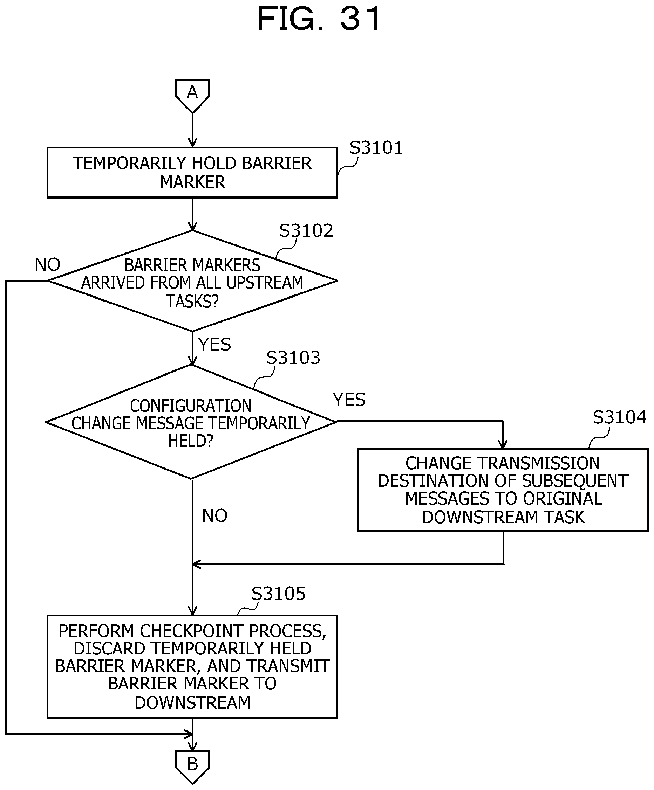

Next, an example of the task processing procedure in Example 1 executed by the arithmetic device 103 will be described with reference to FIGs. 30 and 31. The task processing is implemented by, for example, the CPU 1101, a storage area such as the memory 1102, the recording medium 1105, or the like, and the network I/F 1103 illustrated in FIG. 11.

FIGs. 30 and 31 are flowcharts illustrating an example of the task processing procedure in Example 1. In FIG. 30, the arithmetic device 103 waits until a message is received (operation S3001).

Next, the arithmetic device 103 determines whether or not the type of the message is a data message 600 (operation S3002). Here, when it is determined that the type of the message is the data message 600 (Yes in operation S3002), the arithmetic device 103 proceeds to the processing of operation S3003. Meanwhile, when it is determined that the type of the message is not the data message 600 (No in operation S3002), the arithmetic device 103 proceeds to the processing of operation S3005.

In operation S3003, the arithmetic device 103 executes a normal process (operation S3003). Next, the arithmetic device 103 transmits the data message 600 according to the normal process (operation S3004). Then, the arithmetic device 103 returns to the processing of operation S3001.

In operation S3005, the arithmetic device 103 determines whether or not the type of the message is a configuration change message 700 addressed to the own device (operation S3005). Here, when it is determined that the type of the message is the configuration change message 700 addressed to the own device (Yes in operation S3005), the arithmetic device 103 proceeds to the processing of operation S3006. Meanwhile, when it is determined that the type of the message is not the configuration change message 700 addressed to the own device (No in operation S3005), the arithmetic device 103 proceeds to the processing of operation S3007.

In operation S3006, the arithmetic device 103 transfers the configuration change message 700 according to route information of the configuration change message 700 (operation S3006). Then, the arithmetic device 103 returns to the processing of operation S3001.

In operation S3007, the arithmetic device 103 determines whether or not the type of the message is a configuration change message 700 for changing to the re-input configuration (operation S3007). Here, when it is determined that the type of the message is the configuration change message 700 for changing to the re-input configuration (Yes in operation S3007), the arithmetic device 103 proceeds to the processing of operation S3008. Meanwhile, when it is determined that the type of the message is not the configuration change message 700 for changing to the re-input configuration (No in operation S3007), the arithmetic device 103 proceeds to the processing of operation S3009.

In operation S3008, the arithmetic device 103 changes the transmission destination of subsequent messages to the re-input transmission task (operation S3008). Then, the arithmetic device 103 returns to the processing of operation S3001.

In operation S3009, the arithmetic device 103 determines whether or not the type of the message is a configuration change message 700 for changing to the direct configuration (operation S3009). Here, when it is determined that the type of the message is the configuration change message 700 for changing to the direct configuration (Yes in operation S3009), the arithmetic device 103 temporarily holds the configuration change message 700 (operation S3010). Then, the arithmetic device 103 returns to the processing of operation S3001.

Meanwhile, when it is determined that the type of the message is not the configuration change message 700 for changing to the direct configuration (No in operation S3009), the arithmetic device 103 proceeds to operation S3101 in FIG. 31.

In FIG. 31, the arithmetic device 103 temporarily holds a barrier marker (operation S3101). Next, the arithmetic device 103 determines whether or not barrier markers have arrived from all the upstream tasks (operation S3102). Here, when it is determined that the barrier markers have arrived from all the upstream tasks (Yes in operation S3102), the arithmetic device 103 proceeds to the processing of operation S3103. Meanwhile, when it is determined that the barrier markers have not arrived from any of the upstream tasks (No in operation S3102), the arithmetic device 103 returns to the processing of operation S3001.

In operation S3103, the arithmetic device 103 determines whether or not the configuration change message 700 is temporarily held (operation S3103). Here, in the case of being temporarily held (Yes in operation S3103), the arithmetic device 103 proceeds to the processing of operation S3104. Meanwhile, in the case of not being temporarily held (No in operation S3103), the arithmetic device 103 proceeds to the processing of operation S3105.

In operation S3104, the arithmetic device 103 changes the transmission destination of subsequent messages to the original downstream task (operation S3104). Then, the arithmetic device 103 proceeds to the processing of operation S3105.

In operation S3105, the arithmetic device 103 performs a checkpoint process, discards the temporarily held barrier marker, and transmits the barrier marker to the downstream (operation S3105). Then, the arithmetic device 103 returns to the processing of operation S3001.

### Re-input Processing Procedure in Example 1

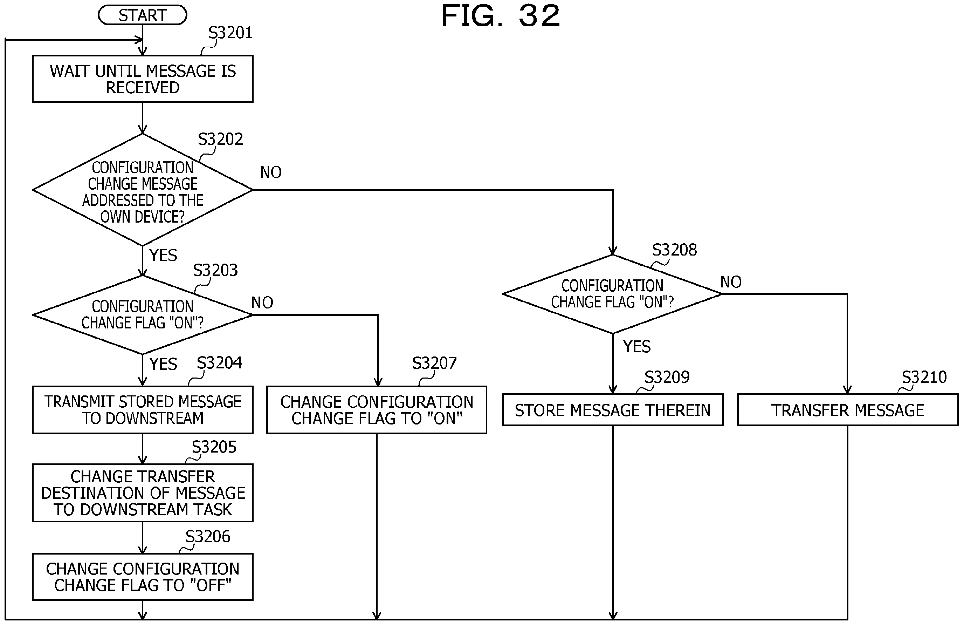

Next, an example of the re-input processing procedure in Example 1 executed by the arithmetic device 103 will be described with reference to FIG. 32. The re-input processing is implemented by, for example, the CPU 1101, a storage area such as the memory 1102, the recording medium 1105, or the like, and the network I/F 1103 illustrated in FIG. 11.

FIG. 32 is a flowchart illustrating an example of the re-input processing procedure in Example 1. In FIG. 32, the arithmetic device 103 waits until a message is received (operation S3201).

Next, the arithmetic device 103 determines whether or not the type of the message is a configuration change message 700 addressed to the own device (operation S3202). Here, when it is determined that the type of the message is the configuration change message 700 addressed to the own device (Yes in operation S3202), the arithmetic device 103 proceeds to the processing of operation S3203. Meanwhile, when it is determined that the type of the message is not the configuration change message 700 addressed to the own device (No in operation S3202), the arithmetic device 103 proceeds to the processing of operation S3208.

In operation S3203, the arithmetic device 103 determines whether or not a configuration change flag is "on" (operation S3203). Here, in the case of being "on" (Yes in operation S3203), the arithmetic device 103 proceeds to the processing of operation S3204. Meanwhile, in the case of being "off" (No in operation S3203), the arithmetic device 103 proceeds to the processing of operation S3207.

In operation S3204, the arithmetic device 103 transmits the stored message to the downstream (operation S3204). Next, the arithmetic device 103 changes the transfer destination of the message to the downstream task (operation S3205). Then, the arithmetic device 103 changes the configuration change flag to "off" (operation S3206). Then, the arithmetic device 103 returns to the processing of operation S3201.

In operation S3207, the arithmetic device 103 changes the configuration change flag to "on" (operation S3207). Then, the arithmetic device 103 returns to the processing of operation S3201.

In operation S3208, the arithmetic device 103 determines whether or not the configuration change flag is "on" (operation S3208). Here, in the case of being "on" (Yes in operation S3208), the arithmetic device 103 proceeds to the processing of operation S3209. Meanwhile, in the case of being "off (No in operation S3208), the arithmetic device 103 proceeds to the processing of operation S3210.

In operation S3209, the arithmetic device 103 stores the message therein (operation S3209). Then, the arithmetic device 103 returns to the processing of operation S3201.

In operation S3210, the arithmetic device 103 transfers the message (operation S3210). Then, the arithmetic device 103 returns to the processing of operation S3201.

### Reception Processing Procedure in Example 1

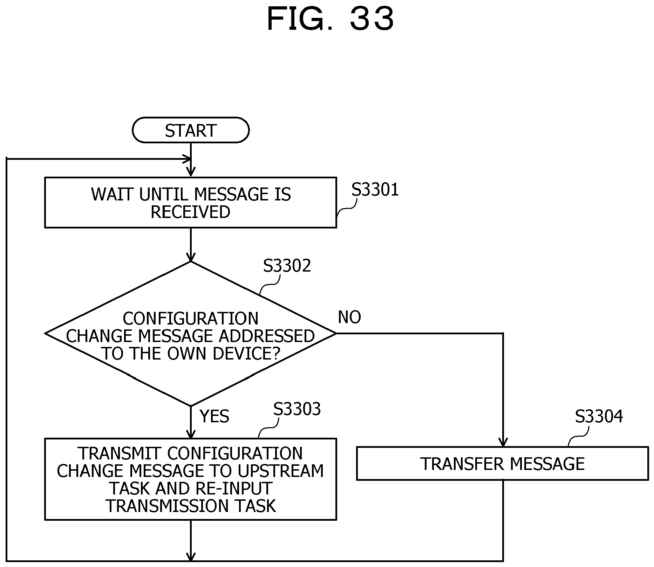

Next, an example of the reception processing procedure in Example 1 executed by the arithmetic device 103 will be described with reference to FIG. 33. The reception processing is implemented by, for example, the CPU 1101, a storage area such as the memory 1102, the recording medium 1105, or the like, and the network I/F 1103 illustrated in FIG. 11.

FIG. 33 is a flowchart illustrating an example of the reception processing procedure in Example 1. In FIG. 33, the arithmetic device 103 waits until a message is received (operation S3301).

Next, the arithmetic device 103 determines whether or not the type of the message is a configuration change message 700 addressed to the own device (operation S3302). Here, when it is determined that the type of the message is the configuration change message 700 addressed to the own device (Yes in operation S3302), the arithmetic device 103 proceeds to the processing of operation S3303. Meanwhile, when it is determined that the type of the message is not the configuration change message 700 addressed to the own device (No in operation S3302), the arithmetic device 103 proceeds to the processing of operation S3304.

In operation S3303, the arithmetic device 103 transmits the configuration change message 700 to the upstream task and the re-input transmission task (operation S3303). Then, the arithmetic device 103 returns to the processing of operation S3301.

In operation S3304, the arithmetic device 103 transfers the message (operation S3304). Then, the arithmetic device 103 returns to the processing of operation S3301.

### Example 2 of Information Processing System 100

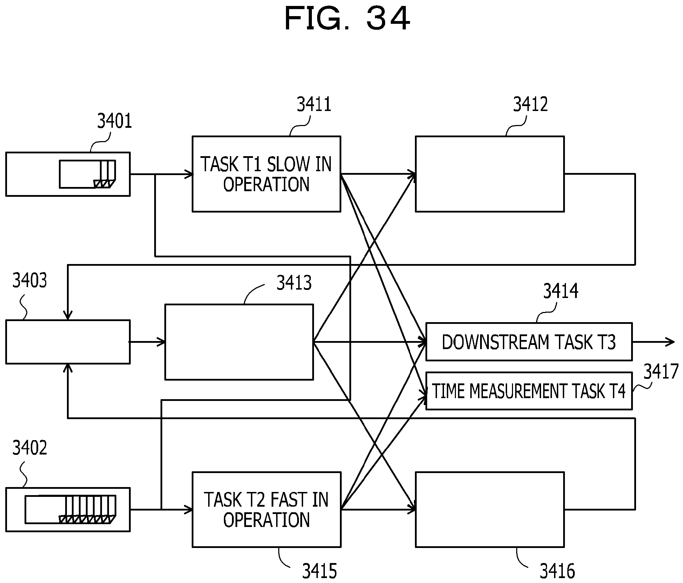

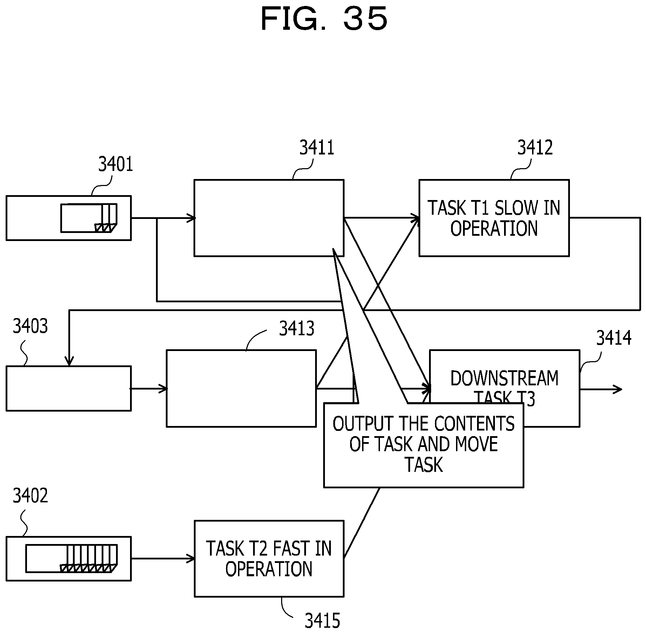

Next, Example 2 of the information processing system 100 will be described with reference to FIGs. 34 to 43. Example 2 is an example in which the arithmetic device 103 may output a task dump and dynamically change the processing contents, and the task may be moved between the arithmetic devices 103. First, an example of changing the connection configuration of the stream processing infrastructure 200 from a direct configuration to a re-input configuration in Example 2 will be described with reference to FIGs. 34 and 35.

FIGs. 34 and 35 are explanatory diagrams illustrating an example of changing the connection configuration of the stream processing infrastructure 200 from the direct configuration to the re-input configuration in Example 2. In the example of FIGs. 34 and 35, there are data stores 3401 to 3403 and arithmetic devices 3411 to 3417.

The arithmetic device 3411 executes a task T1 that is relatively slow in operation. The arithmetic device 3415 executes a task T2 that is relatively fast in operation. The arithmetic device 3414 executes a downstream task T3 that receives data of the processing result of the task T1 and data of the processing result of the task T2. The arithmetic device 3417 executes a time measurement task T4.

In FIG. 34, the connection configuration of the stream processing infrastructure 200 is a direct configuration. For example, there is a connection from the data store 3401 to the arithmetic device 3411. There is also a connection from the data store 3402 to the arithmetic device 3415. There is also a connection from the arithmetic device 3411 to the arithmetic device 3412, the arithmetic device 3414, and the arithmetic device 3417. There is also a connection from the arithmetic device 3412 to the data store 3403.

In addition, there is a connection from the arithmetic device 3415 to the arithmetic device 3416, the arithmetic device 3414, and the arithmetic device 3417. There is also a connection from the arithmetic device 3416 to the data store 3403. There is also a connection from the data store 3403 to the arithmetic device 3413. There is also a connection from the arithmetic device 3413 to the arithmetic device 3411, the arithmetic device 3412, the arithmetic device 3414, the arithmetic device 3415, and the arithmetic device 3416.

The arithmetic device 3411 transmits data of the processing result of the task T1 to the arithmetic device 3414 that executes the task T3, via the connection from the arithmetic device 3411 to the arithmetic device 3414. Further, for example, the arithmetic device 3415 transmits data of the processing result of the task T2 to the arithmetic device 3414 that executes the task T3, via the connection from the arithmetic device 3415 to the arithmetic device 3414.

The control device 101 acquires the waiting time of a barrier marker in the task T3. Here, it is assumed that the waiting time of the barrier marker in the task T3 is equal to or more than the first threshold, and the control device 101 determines to change the connection configuration of the stream processing infrastructure 200 to a re-input configuration. Next, descriptions will be made while referring to FIG. 35.

In FIG. 35, the control device 101 moves the task T1 to the arithmetic device 3412. After the task T1 is moved, the arithmetic device 3411 operates so as to transfer input data, as it is, to the arithmetic device 3412. The arithmetic device 3412 transmits the data of the processing result of the task T1 to the data store 3403 via the connection from the arithmetic device 3412 to the data store 3403. Thereafter, the data of the processing result of the task T1 is re-input from the data store 3403 and is transmitted to the arithmetic device 3414 via the arithmetic device 3413.

As a result, the control device 101 may reduce the waiting time of the barrier marker in the task T3. For example, since the barrier markers output from the data stores 3402 and 3403 may easily arrive at the task T3, the control device 101 may reduce the waiting time of the barrier marker in the task T3.

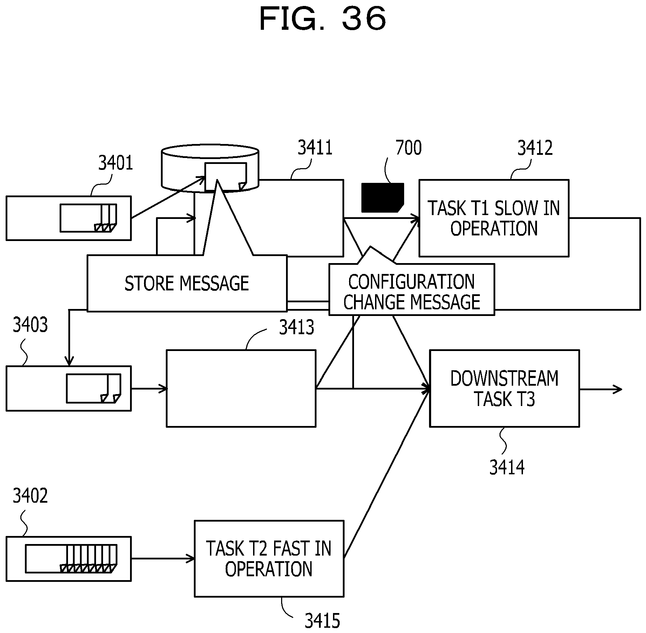

Next, an example of changing the connection configuration of the stream processing infrastructure 200 from the re-input configuration to the direct configuration in Example 2 will be described with reference to FIGs. 36 to 39.
In the example of FIGs. 36 to 39, the connection configuration of the stream processing infrastructure 200 illustrated in FIG. 35 is changed from the re-input configuration to the direct configuration.

FIGs. 36 to 39 are explanatory diagrams illustrating an example of changing the connection configuration of the stream processing infrastructure 200 from the re-input configuration to the direct configuration in Example 2. In FIG. 36, the control device 101 acquires the waiting time of the barrier marker in the task T3 at the time of direct configuration from the arithmetic device 3417 (not illustrated) that executes the time measurement task T4. The time measurement task T4 will may measure the waiting time as in the case illustrated in FIG. 16 of Example 1.

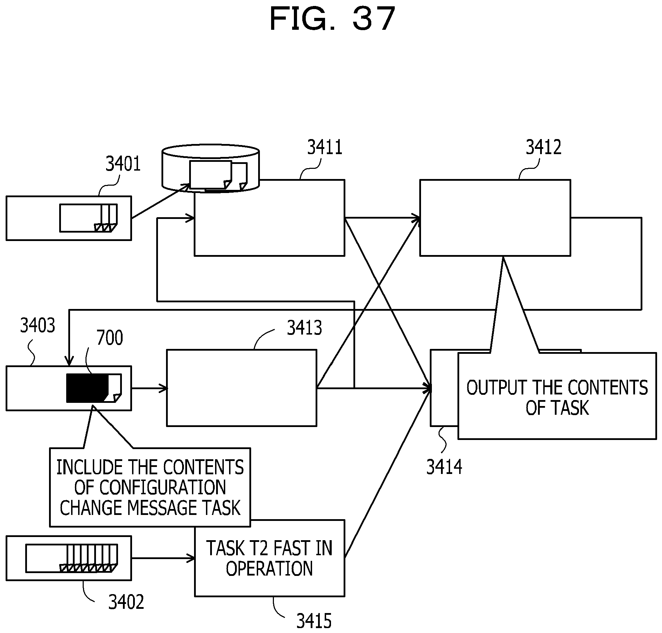

The control device 101 determines to change the connection configuration of the stream processing infrastructure 200 from the re-input configuration to the direct configuration since the waiting time of the barrier marker in the task T3 at the time of direct configuration is less than the second threshold. Here, the control device 101 outputs the configuration change message 700 from the data store 3401. When the configuration change message 700 is received, the arithmetic device 3411 transmits the configuration change message 700 to the arithmetic device 3412 and stores the data after the configuration change message 700. Next, descriptions will be made while referring to FIG. 37.

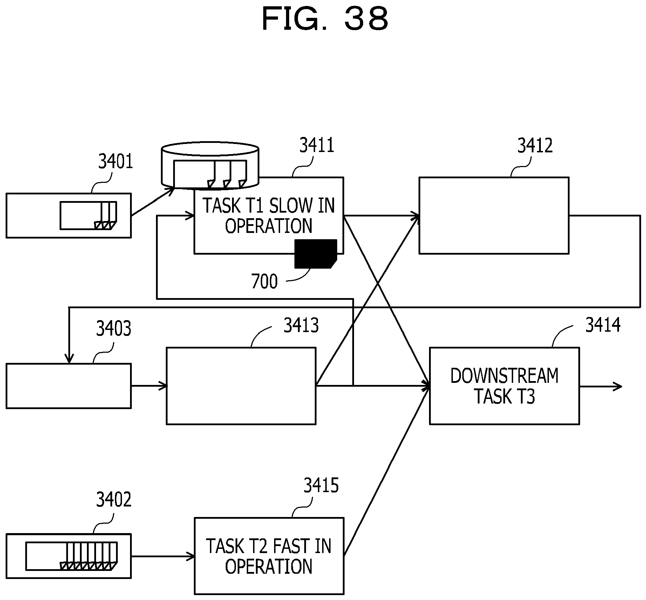

In FIG. 37, when the configuration change message 700 is received, the arithmetic device 3412 writes the processing contents of the task T1 in the configuration change message 700. In addition, the arithmetic device 3412 transmits the configuration change message 700 to the data store 3403 without overtaking the data before the configuration change message 700. Next, descriptions will be made while referring to FIG. 38.

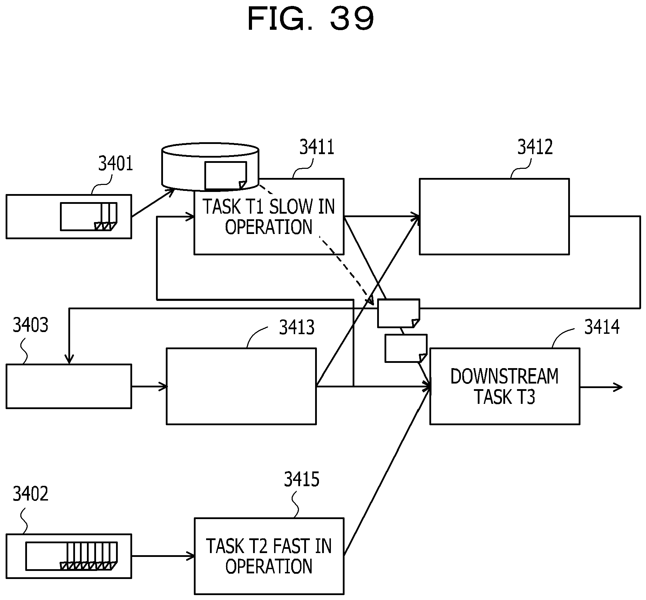

In FIG. 38, the data store 3403 transmits the configuration change message 700 to the arithmetic device 3413, and the arithmetic device 3413 transmits the configuration change message 700 to the arithmetic device 3411. The arithmetic device 3411 receives the configuration change message 700 and restores the task T1 based on the processing contents of the task T1 written in the configuration change message 700. Next, descriptions will be made while referring to FIG. 39.

In FIG. 39, the arithmetic device 3411 performs a predetermined data process on the stored data by the task T1, and transmits the data of the processing result of the task T1 to the arithmetic device 3414 that executes the task T3.

In this way, the arithmetic device 3412 transmits the configuration change message 700 to the data store 3403 so as not to overtake the data before the configuration change message 700. For this reason, when the configuration change message 700 is returned to the arithmetic device 3411, the data before the configuration change message 700 has been transmitted to the arithmetic device 3414. Therefore, even when the arithmetic device 3411 transmits the data of the processing result of the task T1 to the arithmetic device 3414, the data order is secured.

As a result, the control device 101 may change the connection configuration of the stream processing infrastructure 200 from the re-input configuration to the direct configuration while securing the data order. For this reason, when it is determined that the waiting time of the barrier marker in the task T3 at the time of direct configuration is relatively short, the control device 101 may prevent the processing delay caused by re-inputting the data from the arithmetic device 3412 into the data store 3403.

In addition, the control device 101 may switch the connection state of the stream processing infrastructure 200 between the direct configuration and the re-input configuration even when the connection relationship between the arithmetic devices 103 may not be changed except when the information processing system 100 is activated. Therefore, the control device 101 may improve the convenience of the information processing system 100.

### Overall Processing Procedure in Example 2

An example of the overall processing procedure in Example 2 executed by the control device 101 is the same as the example of the overall processing procedure in Example 1 illustrated in FIG. 28 and therefore, explanation thereof will not be repeated.

### Task Processing Procedure in Example 2

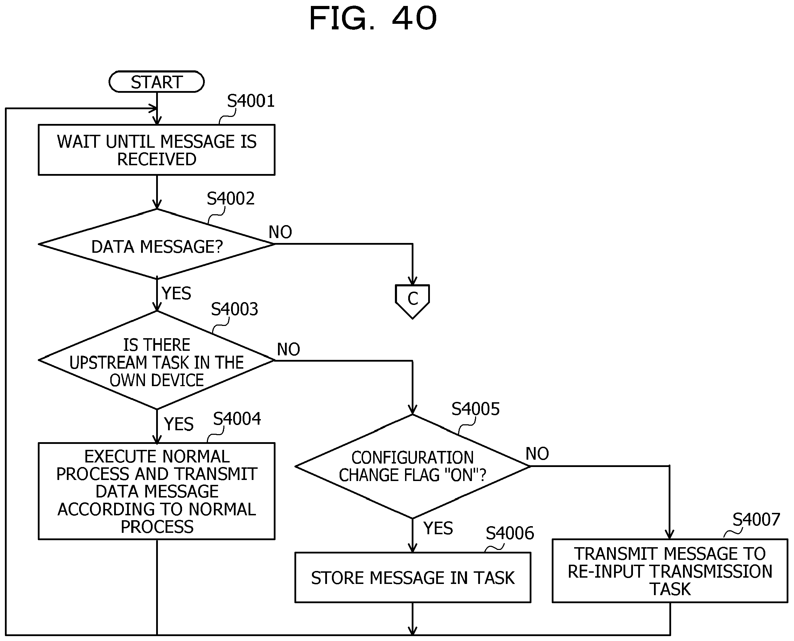

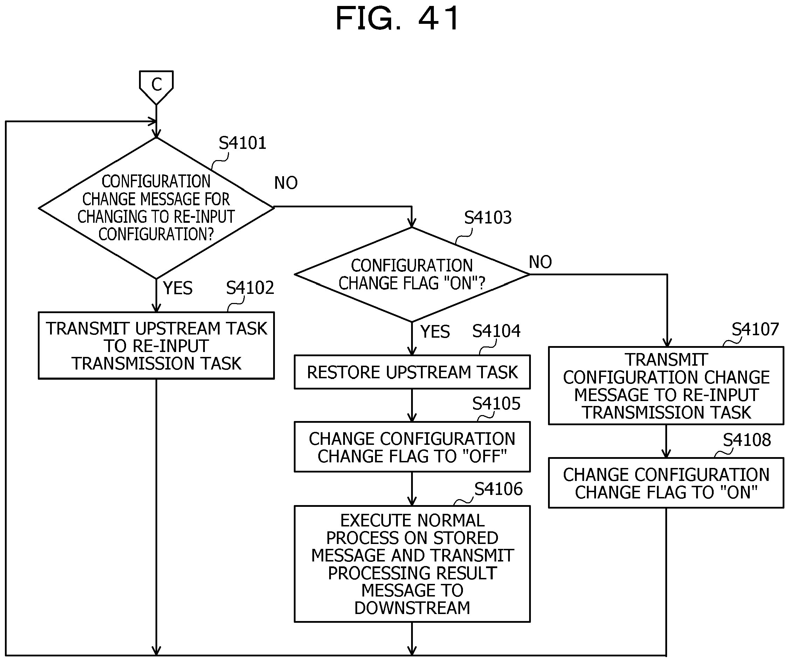

Next, an example of the task processing procedure in Example 2 executed by the arithmetic device 103 will be described with reference to FIGs. 40 and 41. The task processing is implemented by, for example, the CPU 1101, a storage area such as the memory 1102, the recording medium 1105, or the like, and the network I/F 1103 illustrated in FIG. 11.

FIGs. 40 and 41 are flowcharts illustrating an example of the task processing procedure in Example 2. In FIG. 40, the arithmetic device 103 waits until a message is received (operation S4001).

Next, the arithmetic device 103 determines whether or not the type of a message is a data message 600 (operation S4002). Here, when it is determined that the type of the message is the data message 600 (Yes in operation S4002), the arithmetic device 103 proceeds to the processing of operation S4003. Meanwhile, when it is determined that the type of the message is not the data message 600 (No in operation S4002), the arithmetic device 103 proceeds to the processing of operation S4101 of FIG. 41.

In operation S4003, the arithmetic device 103 determines whether or not there is an upstream task in the own device 103 (operation S4003).

Here, when it is determined that there is an upstream task (Yes in operation S4003), the arithmetic device 103 proceeds to the processing of operation S4004. Meanwhile, when it is determined that there is no upstream task (No in operation S4003), the arithmetic device 103 proceeds to the processing of operation S4005.

In operation S4004, the arithmetic device 103 executes a normal process and transmits the data message 600 according to the normal process (operation S4004). Then, the arithmetic device 103 returns to the processing of operation S4001.

In operation S4005, the arithmetic device 103 determines whether or not a configuration change flag is "on" (operation S4005). Here, when it is determined that the configuration change flag is "on" (Yes in operation S4005), the arithmetic device 103 proceeds to the processing of operation S4006. Meanwhile, when it is determined that the configuration change flag is "off" instead of "on" (No in operation S4005), the arithmetic device 103 proceeds to the processing of operation S4007.

In operation S4006, the arithmetic device 103 stores the message in the task (operation S4006). Then, the arithmetic device 103 returns to the processing of operation S4001.

In operation S4007, the arithmetic device 103 transmits the message to a re-input transmission task (operation S4007). Then, the arithmetic device 103 returns to the processing of operation S4001. Here, descriptions will be made while referring to FIG. 41.

In FIG. 41, the arithmetic device 103 determines whether or not the type of the message is a configuration change message 700 for changing to a re-input configuration (operation S4101). Here, when it is determined that the type of the message is the configuration change message 700 for changing to the re-input configuration (Yes in operation S4101), the arithmetic device 103 proceeds to the processing of operation S4102. Meanwhile, when it is determined that the type of the message is not the configuration change message 700 for changing to the re-input configuration (No in operation S4101), the arithmetic device 103 proceeds to the processing of operation S4103.

In operation S4102, the arithmetic device 103 transmits the upstream task to the re-input transmission task (operation S4102). Then, the arithmetic device 103 returns to the processing of operation S4101.

In operation S4103, the arithmetic device 103 determines whether or not the configuration change flag is "on" (operation S4103). Here, when it is determined that the configuration change flag is "on" (Yes in operation S4103), the arithmetic device 103 proceeds to the processing of operation S4104. Meanwhile, when it is determined that the configuration change flag is "off" instead of "on" (No in operation S4103), the arithmetic device 103 proceeds to the processing of operation S4107.

In operation S4104, the arithmetic device 103 restores the upstream task (operation S4104). Next, the arithmetic device 103 changes the configuration change flag to "off" (operation S4105). Then, the arithmetic device 103 executes the normal process on the stored message and transmits a processing result message to the downstream (operation S4106). Then, the arithmetic device 103 returns to the processing of operation S4101.

In operation S4107, the arithmetic device 103 transmits the configuration change message 700 to the re-input transmission task (operation S4107). Next, the arithmetic device 103 changes the configuration change flag to "on" (operation S4108). Then, the arithmetic device 103 returns to the processing of operation S4101.

### Re-input Processing Procedure in Example 2

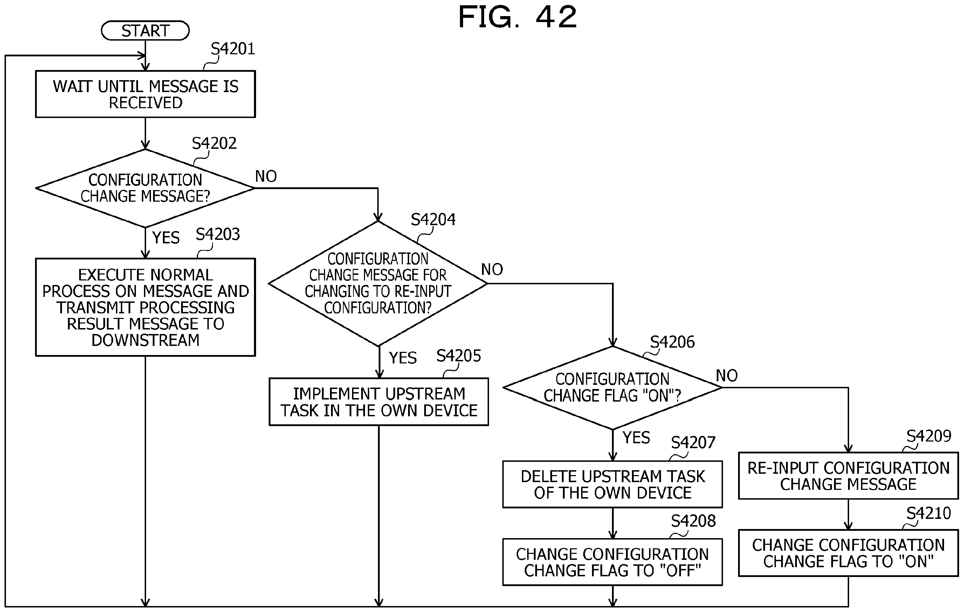

Next, an example of the re-input processing procedure in Example 2 executed by the arithmetic device 103 will be described with reference to FIG. 42. The re-input processing is implemented by, for example, the CPU 1101, a storage area such as the memory 1102, the recording medium 1105, or the like, and the network I/F 1103 illustrated in FIG. 11.

FIG. 42 is a flowchart illustrating an example of the re-input processing procedure in Example 2. In FIG. 42, the arithmetic device 103 waits until a message is received (operation S4201).

Next, the arithmetic device 103 determines whether or not the type of a message is a configuration change message 700 (operation S4202). Here, when it is determined that the type of the message is the configuration change message 700 (Yes in operation S4202), the arithmetic device 103 proceeds to the processing of operation S4203. Meanwhile, when it is determined that the type of the message is not the configuration change message 700 (No in operation S4202), the arithmetic device 103 proceeds to the processing of operation S4204.

In operation S4203, the arithmetic device 103 executes a normal process on the message and transmits a processing result message to the downstream (operation S4203). Then, the arithmetic device 103 returns to the processing of operation S4201.

In operation S4204, the arithmetic device 103 determines whether or not the type of the message is a configuration change message 700 for changing to the re-input configuration (operation S4204). Here, when it is determined that the type of the message is the configuration change message 700 for changing to the re-input configuration (Yes in operation S4204), the arithmetic device 103 proceeds to the processing of operation S4205. Meanwhile, when it is determined that the type of the message is not the configuration change message 700 for changing to the re-input configuration (No in operation S4204), the arithmetic device 103 proceeds to the processing of operation S4206.

In operation S4205, the arithmetic device 103 implements an upstream task in the own device (operation S4205). Then, the arithmetic device 103 returns to the processing of operation S4201.

In operation S4206, the arithmetic device 103 determines whether or not the configuration change flag is "on" (operation S4206). Here, in the case of being "on" (Yes in operation S4206), the arithmetic device 103 proceeds to the processing of operation S4207. Meanwhile, in the case of being "off instead of "on" (No in operation S4206), the arithmetic device 103 proceeds to the processing of operation S4209.

In operation S4207, the arithmetic device 103 deletes the upstream task of the own device (operation S4207). Next, the arithmetic device 103 changes a configuration change flag to "off" (operation S4208). Then, the arithmetic device 103 returns to the processing of operation S4201.

In operation S4209, the arithmetic device 103 re-inputs the configuration change message 700 (operation S4209). Next, the arithmetic device 103 changes the configuration change flag to "on" (operation S4210). Then, the arithmetic device 103 returns to the processing of operation S4201.

### Reception Processing Procedure in Example 2

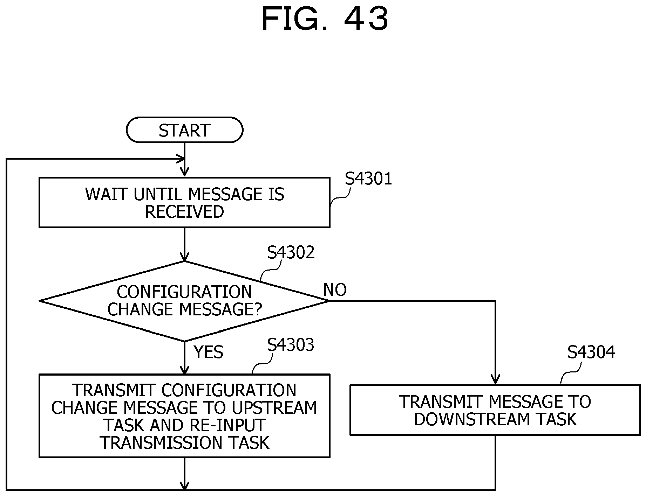

Next, an example of the reception processing procedure in Example 2 executed by the arithmetic device 103 will be described with reference to FIG. 43. The reception processing is implemented by, for example, the CPU 1101, a storage area such as the memory 1102, the recording medium 1105, or the like, and the network I/F 1103 illustrated in FIG. 11.

FIG. 43 is a flowchart illustrating an example of the reception processing procedure in Example 2. In FIG. 43, the arithmetic device 103 waits until a message is received (operation S4301).

Next, the arithmetic device 103 determines whether or not the type of a message is a configuration change message 700 (operation S4302). Here, when it is determined that the type of the message is the configuration change message 700 (Yes in operation S4302), the arithmetic device 103 proceeds to the processing of operation S4303. Meanwhile, when it is determined that the type of the message is not the configuration change message 700 (No in operation S4302), the arithmetic device 103 proceeds to the processing of operation S4304.

In operation S4303, the arithmetic device 103 transmits the configuration change message 700 to the upstream task and the re-input transmission task (operation S4303). Then, the arithmetic device 103 returns to the processing of operation S4301.

In operation S4304, the arithmetic device 103 transmits the message to the downstream task (operation S4304). Then, the arithmetic device 103 returns to the processing of operation S4301.

As described above, according to the control device 101, a message instructing the backup of the internal state will be output from each data store 201. According to the control device 101, the second processing unit 412 will acquire the information about the waiting time until the message is received by the number of paths through which data is input to the second processing unit 412. According to the control device 101, it will be determined based on the acquired information whether or not the waiting time is equal to or more than the first threshold. According to the control device 101, when it is determined that the waiting time is equal to or more than the first threshold, it is possible to switch from the first configuration to the second configuration. The first configuration is a configuration in which the third data store 403 is not included on the path from the first processing unit 411 to the second processing unit 412. The second configuration is a configuration including the third data store 403 on the path from the first processing unit 411 to the second processing unit 412. As a result, the control device 101 may reduce the waiting time of a message in the second processing unit 412.

According to the control device 101, it may be determined based on the acquired information whether or not the waiting time is less than the second threshold. According to the control device 101, when it is determined that the waiting time is less than the second threshold, it is possible to switch from the second configuration to the first configuration. Accordingly, the control device 101 may reduce the transmission delay on the path from the first processing unit 411 to the second processing unit 412.

According to the control device 101, when it is determined that the waiting time is equal to or more than the first threshold, the output destination of the first processing unit 411 will be switched from the second processing unit 412 to the first relay unit. As a result, the control device 101 may reduce the waiting time of a message in the second processing unit 412 by the method of changing the connection relationship of the processing units.

According to the control device 101, when it is determined that the waiting time is less than the second threshold, the output destination of the first processing unit 411 may be switched from the first relay unit to the second processing unit 412. Accordingly, the control device 101 may reduce the transmission delay on the path from the first processing unit 411 to the second processing unit 412 by the method of changing the connection relationship of the processing units.

According to the control device 101, when it is determined that the waiting time is less than the second threshold, a request to switch the output destination of the first processing unit 411 to the second processing unit 412 may be output from the first data store 201. Accordingly, the control device 101 may reduce the transmission delay on the path from the first processing unit 411 to the second processing unit 412 while securing the data order.

According to the control device 101, when it is determined that the waiting time is equal to or more than the first threshold, the first task 202 may be moved from the first arithmetic device 103 to the third arithmetic device 103 capable of executing the first task 202. Accordingly, the control device 101 may reduce the waiting time of a message in the second processing unit 412 by the method of moving the task 202 between the arithmetic devices 103.

According to the control device 101, when it is determined that the waiting time is less than the second threshold, the first task 202 may be moved from the third arithmetic device 103 to the first arithmetic device 103. Accordingly, the control device 101 may reduce the transmission delay on the path from the first processing unit 411 to the second processing unit 412 by the method of moving the task 202 between the arithmetic devices 103.

According to the control device 101, when it is determined that the waiting time is less than the second threshold, a request to move the first task 202 from the third arithmetic device 103 to the first arithmetic device 103 may be output from the first data store 201. Accordingly, the control device 101 may reduce the transmission delay on the path from the first processing unit 411 to the second processing unit 412 while securing the data order.

According to the control device 101, the path from the first processing unit 411 to the second processing unit 412 that does not include the third data store 403 may be adopted in the first configuration. According to the control device 101, the path from the first processing unit 411 including the third data store 403 to the second processing unit 412, which merges at the path adopted in the first configuration and the second processing unit 412, may be adopted in the second configuration. As a result, the control device 101 may adopt a processing unit in which message waiting occurs, in the second processing unit 412.

According to the control device 101, when it is determined that the waiting time is equal to or more than the first threshold, the third data store 403 may be generated and will be switched from the first configuration to the second configuration. As a result, the control device 101 may make the resources that implement the third data store 403 available for another use in a situation where the third data store 403 is not used.

According to the control device 101, after a message is output from any one of the plurality of data stores 201, the message may be controlled to be discarded without being input to another data store 201 different from any one of the data stores 201. As a result, the control device 101 may prevent a message that does not need to arrive at the second processing unit 412 from accidentally arriving at the second processing unit 412.

The information processing method described in the present embodiment may be implemented by executing a prepared program on a computer such as a PC, a workstation, or the like. The information processing program described in the present embodiment is executed by being recorded in a computer-readable recording medium and being read from the recording medium by the computer. The recording medium is a hard disk, a flexible disk, a CD (Compact Disc)-ROM, an MO, a DVD (Digital Versatile Disk), or the like. The information processing program described in the present embodiment may be distributed via a network such as the Internet or the like.

## Claims

1. An information processing system (100,200) in which data is processed in a stream processing format, the information processing system comprising:
a plurality of storage devices (102,201) comprising a first storage device (401), a second storage device (402), and a third storage device (403), wherein
each of the storage devices is configured to output data to a first path connected to an arithmetic device out of a plurality of arithmetic devices (103);
the plurality of arithmetic devices (103) comprising a first arithmetic device (411), a second arithmetic device (412), a third arithmetic device (413), a fourth arithmetic device (421), and a fifth arithmetic device (422), wherein
each of the arithmetic devices is configured to
receive a message (700) instructing a backup of an internal state at at least two first paths;
output data to a second path connected to a storage device (403) or another arithmetic device (421);
in response to receiving the message at the at least two first paths, back up its internal state, and output another message instructing a backup of an internal state to the second path,
and the first arithmetic device (411) is slow in operation and the fifth arithmetic device (422) is fast in operation; and
a control device (101) configured to
acquire information of a waiting time until the second arithmetic device (412) receives
the message at the at least two first paths, wherein
the waiting time is estimated based on the processing loads of the first arithmetic device (411) and the third arithmetic device (413),
determine whether or not the waiting time is equal to or more than a first threshold, based on the acquired information, and, when it is determined that the waiting time is equal to or more than the first threshold,
change a first configuration (400),
wherein the second arithmetic device (412) is coupled to the first storage device (401) through the first arithmetic device (411), and the second arithmetic device (412) is coupled to the second storage device (402) through the third arithmetic device (413),
to a second configuration (430), wherein
the second arithmetic device (412) is coupled to the first storage device (401) through the first arithmetic device (411), the fourth arithmetic device (421), the third storage device (403), and the fifth arithmetic device (422).

2. The information processing system according to claim 1,
wherein the control device (101):
is configured to determine whether or not the waiting time is less than a second threshold, based on the acquired information, and
change the second configuration (403) to the first configuration (400) when it is determined that the waiting time is less than the second threshold.

3. The information processing system according to claim 1 or 2,
wherein the control device (101) is configured to change an output destination of the first arithmetic device (411) from the second arithmetic device (412) to the fourth arithmetic device (421) when it is determined that the waiting time is equal to or more than the first threshold.

4. The information processing system according to claim 3,
wherein the control device (101) is configured to change the output destination of the first arithmetic device (411) from the fourth arithmetic device (421) to the second arithmetic device (412) when it is determined that the waiting time is less than the second threshold.

5. The information processing system according to claim 4,
wherein the control device (101) is configured to control the first storage device (401) to output a request to set the output destination of the first arithmetic device (411) to the second arithmetic device (412) when it is determined that the waiting time is less than the second threshold so that the request is transferred to the first arithmetic device (411) and the fourth arithmetic device (412),
wherein the fourth arithmetic device (421) is configured to store the data input to the fourth arithmetic device (421) and output the stored data to the second arithmetic device (412) when the request is received, and
wherein the first arithmetic device (411) is configured to change the output destination of the first arithmetic device (411) from the fourth arithmetic device (421) to the second arithmetic device (412).

6. The information processing system according to claim 1 or 2, wherein
the first arithmetic device (411) and the second arithmetic device (412) are configured to execute a first task (1511) and a second task (1513) to process a predetermined data, respectively, by each of said processors,
the first arithmetic device (411) is coupled to the second arithmetic (412) device and configured to transmit the data of a processing result of the first task to the second arithmetic device when the first task is executed,
the control device is configured to transfer the first task (1511) from the first arithmetic device (411) to the fourth arithmetic device (421) capable of executing the first task when it is determined that the waiting time is equal to or more than the first threshold,
the first arithmetic device (411) is coupled to the fourth arithmetic device (421) and configured to transmit the data to the fourth arithmetic device when not executing the first task,
the fourth arithmetic device (421) is coupled to the third storage device (403) and configured to transmit the data of the processing result of the first task (1511) to the third storage device (403),
the third storage device (403) is coupled to the fifth arithmetic device (422) and configured to transmit the data to the fifth arithmetic device (422), and
the fifth arithmetic device (422) is coupled to the second arithmetic device (412) and configured to transmit the data to the second arithmetic device.

7. The information processing system according to claim 6, wherein the control device (101) is configured to transfer the first task (1511) from the fourth arithmetic device (421) to the first arithmetic device (411) when it is determined that the waiting time is less than the second threshold.

8. The information processing system according to claim 7, wherein
the control device (101) is configured to control the first storage device (401) to output a request to transfer the first task (1511) from the fourth arithmetic device (421) to the first arithmetic device (411) when it is determined that the waiting time is less than the second threshold,
the first arithmetic device (411) is configured to transmit the request to the fourth arithmetic device (421) and store the data after the request when the request is received,
the fourth arithmetic device (421) is configured to terminate the first task (1511) and transmit processing information defining the processing contents of the first task (1511) to the third storage device (403) when the request is received,
the third data storage device (403) is configured to transmit the processing information to the fifth arithmetic device (422),
the fifth arithmetic device (422) is coupled to the first arithmetic device (411) and is configured to transmit the processing information to the first arithmetic device (411), and
the first arithmetic device (411) is configured to execute the first task (1511) based on the processing information and to transmit the data of the processing result of the first task (1511) to the second arithmetic device (412) based on the data after the request when the processing information is received.

9. The information processing system according to any one of claims 1 to 8, wherein
a path from the first arithmetic device (411,1511) to the second arithmetic device (412,1513), which does not include the third storage device (403,) in the first configuration, and
a path from the first arithmetic device (411) to the second arithmetic device (412), which includes the third storage device (403), merge at the second arithmetic device (412) in the second configuration.

10. The information processing system according to any one of claims 1 to 9, wherein
the control device (101) is configured to operate as the third storage device (403) and change the first configuration (400) to the second configuration (430) when it is determined that the waiting time is equal to or more than the first threshold.

11. The information processing system according to any one of claims 1 to 10, wherein the message is output from one of the plurality of storage devices (102,201) and then is discarded without being input to another storage device.

12. An information processing method of a system (100) in which data is processed in a stream processing format, the information processing method comprising:
outputting the data to a first path connecting a storage device to an arithmetic device, by a first processor,
wherein the storage device is a storage device out of a plurality of storage devices comprising a first storage device (401), a second storage device (402), and a third storage device (403), and
the arithmetic device is an arithmetic device out of a plurality of arithmetic devices comprising a first arithmetic device (411), a second arithmetic device (412), a third arithmetic device (413), a fourth arithmetic device (421), and a fifth arithmetic device (422);
wherein the second arithmetic device (412) performs the steps of
receiving a message (700) instructing a backup of an internal state at at least two first paths,
outputting data to a second path connected to a storage device or another arithmetic device (421), in response to receiving the message at the at least two first paths, backing up its internal state, and outputting another message instructing backup of an internal state to the second path; and
acquiring information by a control device of a waiting time until the second arithmetic device (413) (412) receives the message at the at least two first paths, wherein the waiting time is estimated based on the processing loads of the first arithmetic device (411) and the third arithmetic device (413),
determining whether or not the waiting time is equal to or more than a first threshold, based on the acquired information, and, when it is determined that the waiting time is equal to or more than the first threshold by the control device,
changing by the control device a first configuration,
wherein the second arithmetic device (412) is coupled to the first storage device (401) through the first arithmetic device (411) and the second arithmetic device (412) is coupled to the second storage device (402) through the third arithmetic device (413),
to a second configuration, wherein
the second arithmetic device (412) is coupled to the first storage device (401) through the first arithmetic device (411), the fourth arithmetic device (421), the third storage device (403), and the fifth arithmetic device (422).

13. An information processing program of a system (100) in which data is processed in a stream processing format, that causes a computer to execute a process, that implements the method of claim 12.

## Patentansprüche

1. Informationsverarbeitungssystem (100, 200), in dem Daten in einem Streamverarbeitungsformat verarbeitet werden, wobei das Informationsverarbeitungssystem umfasst:
eine Vielzahl von Speichervorrichtungen (102, 201), die eine erste Speichervorrichtung (401), eine zweite Speichervorrichtung (402) und eine dritte Speichervorrichtung (403) umfasst, wobei
jede der Speichervorrichtungen dazu konfiguriert ist, Daten an einen ersten Pfad auszugeben, der mit einer Rechenvorrichtung aus einer Vielzahl von Rechenvorrichtungen (103) verbunden ist;
wobei die Vielzahl von Rechenvorrichtungen (103) eine erste Rechenvorrichtung (411), eine zweite Rechenvorrichtung (412), eine dritte Rechenvorrichtung (413), eine vierte Rechenvorrichtung (421) und eine fünfte Rechenvorrichtung (422) umfasst, wobei
jede der Rechenvorrichtungen dazu konfiguriert ist,
eine Nachricht (700), die eine Sicherung eines internen Zustands anweist, auf mindestens zwei ersten Pfaden zu empfangen;
Daten an einen zweiten Pfad auszugeben, der mit einer Speichervorrichtung (403) oder einer anderen Rechenvorrichtung (421) verbunden ist;
als Reaktion auf ein Empfangen der Nachricht auf den mindestens zwei ersten Pfaden ihren internen Zustand zu sichern und eine weitere Nachricht, die eine Sicherung eines internen Zustands anweist, an den zweiten Pfad auszugeben,
und die erste Rechenvorrichtung (411) im Betrieb langsam ist und die fünfte Rechenvorrichtung (422) im Betrieb schnell ist; und
eine Steuervorrichtung (101), die dazu konfiguriert ist,
Informationen über eine Wartezeit, bis die zweite Rechenvorrichtung (412) die Nachricht auf den mindestens zwei ersten Pfaden empfängt, zu erfassen, wobei
die Wartezeit auf der Grundlage der Verarbeitungslasten der ersten Rechenvorrichtung (411) und der dritten Rechenvorrichtung (413) geschätzt wird,
auf der Grundlage der erfassten Informationen festzustellen, ob die Wartezeit gleich wie oder größer als ein erster Schwellenwert ist oder nicht, und, wenn festgestellt wird, dass die Wartezeit gleich wie oder größer als der erste Schwellenwert ist,
eine erste Konfiguration (400),
wobei die zweite Rechenvorrichtung (412) über die erste Rechenvorrichtung (411) mit der ersten Speichervorrichtung (401) gekoppelt ist und die zweite Rechenvorrichtung (412) über die dritte Rechenvorrichtung (413) mit der zweiten Speichervorrichtung (402) gekoppelt ist,
in eine zweite Konfiguration (430) zu ändern, wobei
die zweite Rechenvorrichtung (412) über die erste Rechenvorrichtung (411), die vierte Rechenvorrichtung (421), die dritte Speichervorrichtung (403) und die fünfte Rechenvorrichtung (422) mit der ersten Speichervorrichtung (401) gekoppelt ist.

2. Informationsverarbeitungssystem nach Anspruch 1,
wobei die Steuervorrichtung (101):
dazu konfiguriert ist, auf der Grundlage der erfassten Informationen festzustellen, ob die Wartezeit kleiner als ein zweiter Schwellenwert ist oder nicht, und
die zweite Konfiguration (403) in die erste Konfiguration (400) zu ändern, wenn festgestellt wird, dass die Wartezeit kleiner als der zweite Schwellenwert ist.

3. Informationsverarbeitungssystem nach Anspruch 1 oder 2,
wobei die Steuervorrichtung (101) dazu konfiguriert ist, ein Ausgabeziel der ersten Rechenvorrichtung (411) von der zweiten Rechenvorrichtung (412) auf die vierte Rechenvorrichtung (421) zu ändern, wenn festgestellt wird, dass die Wartezeit gleich wie oder größer als der erste Schwellenwert ist.

4. Informationsverarbeitungssystem nach Anspruch 3,
wobei die Steuervorrichtung (101) dazu konfiguriert ist, das Ausgabeziel der ersten Rechenvorrichtung (411) von der vierten Rechenvorrichtung (421) auf die zweite Rechenvorrichtung (412) zu ändern, wenn festgestellt wird, dass die Wartezeit kleiner als der zweite Schwellenwert ist.

5. Informationsverarbeitungssystem nach Anspruch 4,
wobei die Steuervorrichtung (101) dazu konfiguriert ist, die erste Speichervorrichtung (401) so zu steuern, dass sie eine Anforderung zum Setzen des Ausgabeziels der ersten Rechenvorrichtung (411) an die zweite Rechenvorrichtung (412) ausgibt, wenn festgestellt wird, dass die Wartezeit kleiner als der zweite Schwellenwert ist, sodass die Anforderung an die erste Rechenvorrichtung (411) und die vierte Rechenvorrichtung (412) übertragen wird,
wobei die vierte Rechenvorrichtung (421) dazu konfiguriert ist, die in die vierte Rechenvorrichtung (421) eingegebenen Daten zu speichern und die gespeicherten Daten an die zweite Rechenvorrichtung (412) auszugeben, wenn die Anforderung empfangen wird, und
wobei die erste Rechenvorrichtung (411) dazu konfiguriert ist, das Ausgabeziel der ersten Rechenvorrichtung (411) von der vierten Rechenvorrichtung (421) auf die zweite Rechenvorrichtung (412) zu ändern.

6. Informationsverarbeitungssystem nach Anspruch 1 oder 2, wobei
die erste Rechenvorrichtung (411) und die zweite Rechenvorrichtung (412) dazu konfiguriert sind, eine erste Aufgabe (1511) und eine zweite Aufgabe (1513) ausführen, um vorbestimmte Daten jeweils durch jeden der Prozessoren zu verarbeiten,
die erste Rechenvorrichtung (411) mit der zweiten Rechenvorrichtung (412) gekoppelt ist und dazu konfiguriert ist, die Daten eines Verarbeitungsergebnisses der ersten Aufgabe an die zweite Rechenvorrichtung zu übermitteln, wenn die erste Aufgabe ausgeführt wird,
die Steuervorrichtung dazu konfiguriert ist, die erste Aufgabe (1511) von der ersten Rechenvorrichtung (411) an die vierte Rechenvorrichtung (421) zu übertragen, die in der Lage ist, die erste Aufgabe auszuführen, wenn festgestellt wird, dass die Wartezeit gleich wie oder größer als der erste Schwellenwert ist,
die erste Rechenvorrichtung (411) mit der vierten Rechenvorrichtung (421) gekoppelt ist und dazu konfiguriert ist, die Daten an die vierte Rechenvorrichtung zu übermitteln, wenn sie die erste Aufgabe nicht ausführt,
die vierte Rechenvorrichtung (421) mit der dritten Speichervorrichtung (403) gekoppelt ist und dazu konfiguriert ist, die Daten des Verarbeitungsergebnisses der ersten Aufgabe (1511) an die dritte Speichervorrichtung (403) zu übermitteln,
die dritte Speichervorrichtung (403) mit der fünften Rechenvorrichtung (422) gekoppelt ist und dazu konfiguriert ist, die Daten an die fünfte Rechenvorrichtung (422) zu übermitteln, und
die fünfte Rechenvorrichtung (422) mit der zweiten Rechenvorrichtung (412) gekoppelt ist und dazu konfiguriert ist, die Daten an die zweite Rechenvorrichtung zu übermitteln.

7. Informationsverarbeitungssystem nach Anspruch 6, wobei die Steuervorrichtung (101) dazu konfiguriert ist, die erste Aufgabe (1511) von der vierten Rechenvorrichtung (421) an die erste Rechenvorrichtung (411) zu übertragen, wenn festgestellt wird, dass die Wartezeit kleiner als der zweite Schwellenwert ist.

8. Informationsverarbeitungssystem nach Anspruch 7, wobei
die Steuervorrichtung (101) dazu konfiguriert ist, die erste Speichervorrichtung (401) so zu steuern, dass sie eine Anforderung zum Übertragen der ersten Aufgabe (1511) von der vierten Rechenvorrichtung (421) an die erste Rechenvorrichtung (411) ausgibt, wenn festgestellt wird, dass die Wartezeit kleiner als der zweite Schwellenwert ist,
die erste Rechenvorrichtung (411) dazu konfiguriert ist, die Anforderung an die vierte Rechenvorrichtung (421) zu übermitteln und die Daten nach der Anforderung zu speichern, wenn die Anforderung empfangen wird,
die vierte Rechenvorrichtung (421) dazu konfiguriert ist, die erste Aufgabe (1511) zu beenden und Verarbeitungsinformationen, die die Verarbeitungsinhalte der ersten Aufgabe (1511) definieren, an die dritte Speichervorrichtung (403) zu übermitteln, wenn die Anforderung empfangen wird,
die dritte Datenspeichervorrichtung (403) dazu konfiguriert ist, die Verarbeitungsinformationen an die fünfte Rechenvorrichtung (422) zu übermitteln,
die fünfte Rechenvorrichtung (422) mit der ersten Rechenvorrichtung (411) gekoppelt ist und dazu konfiguriert ist, die Verarbeitungsinformationen an die erste Rechenvorrichtung (411) zu übermitteln, und
die erste Rechenvorrichtung (411) dazu konfiguriert ist, die erste Aufgabe (1511) auf der Grundlage der Verarbeitungsinformationen auszuführen und die Daten des Verarbeitungsergebnisses der ersten Aufgabe (1511) an die zweite Rechenvorrichtung (412) auf der Grundlage der Daten nach der Anforderung zu übermitteln, wenn die Verarbeitungsinformationen empfangen werden.

9. Informationsverarbeitungssystem nach einem der Ansprüche 1 bis 8, wobei
ein Pfad von der ersten Rechenvorrichtung (411, 1511) zu der zweiten Rechenvorrichtung (412, 1513), der die dritte Speichervorrichtung (403) in der ersten Konfiguration nicht enthält, und
ein Pfad von der ersten Rechenvorrichtung (411) zu der zweiten Rechenvorrichtung (412), der die dritte Speichervorrichtung (403) enthält, in der zweiten Konfiguration an der zweiten Rechenvorrichtung (412) zusammenlaufen.

10. Informationsverarbeitungssystem nach einem der Ansprüche 1 bis 9, wobei
die Steuervorrichtung (101) dazu konfiguriert ist, als die dritte Speichervorrichtung (403) zu arbeiten und die erste Konfiguration (400) in die zweite Konfiguration (430) zu ändern, wenn festgestellt wird, dass die Wartezeit gleich wie oder größer als der erste Schwellenwert ist.

11. Informationsverarbeitungssystem nach einem der Ansprüche 1 bis 10, wobei die Nachricht von einer der Vielzahl von Speichervorrichtungen (102, 201) ausgegeben wird und dann verworfen wird, ohne in eine andere Speichervorrichtung eingegeben zu werden.

12. Informationsverarbeitungsverfahren eines Systems (100), in dem Daten in einem Streamverarbeitungsformat verarbeitet werden, wobei das Informationsverarbeitungsverfahren umfasst:
Ausgeben der Daten an einen ersten Pfad, der eine Speichervorrichtung mit einer Rechenvorrichtung verbindet, durch einen ersten Prozessor,
wobei die Speichervorrichtung eine Speichervorrichtung aus einer Vielzahl von Speichervorrichtungen ist, die eine erste Speichervorrichtung (401), eine zweite Speichervorrichtung (402) und eine dritte Speichervorrichtung (403) umfasst, und
die Rechenvorrichtung eine Rechenvorrichtung aus einer Vielzahl von Rechenvorrichtungen ist, die eine erste Rechenvorrichtung (411), eine zweite Rechenvorrichtung (412), eine dritte Rechenvorrichtung (413), eine vierte Rechenvorrichtung (421) und eine fünfte Rechenvorrichtung (422) umfasst;
wobei die zweite Rechenvorrichtung (412) die folgenden Schritte durchführt:
Empfangen einer Nachricht (700), die eine Sicherung eines internen Zustands anweist, auf mindestens zwei ersten Pfaden,
Ausgeben von Daten an einen zweiten Pfad, der mit einer Speichervorrichtung oder einer anderen Rechenvorrichtung (421) verbunden ist, in Reaktion auf ein Empfangen der Nachricht auf den mindestens zwei ersten Pfaden, Sichern ihres internen Zustands und Ausgeben einer anderen Nachricht, die eine Sicherung eines internen Zustands anweist, an den zweiten Pfad; und
Erfassen von Informationen durch eine Steuervorrichtung über eine Wartezeit, bis die zweite Rechenvorrichtung (413) (412) die Nachricht auf den mindestens zwei ersten Pfaden empfängt, wobei die Wartezeit auf der Grundlage der Verarbeitungslasten der ersten Rechenvorrichtung (411) und der dritten Rechenvorrichtung (413) geschätzt wird,
Feststellen, auf der Grundlage der erfassten Informationen, ob die Wartezeit gleich wie oder größer als ein erster Schwellenwert ist oder nicht, und, wenn durch die Steuervorrichtung festgestellt wird, dass die Wartezeit gleich wie oder größer als der erste Schwellenwert ist,
Ändern, durch die Steuervorrichtung, einer ersten Konfiguration,
wobei die zweite Rechenvorrichtung (412) über die erste Rechenvorrichtung (411) mit der ersten Speichervorrichtung (401) gekoppelt ist und die zweite Rechenvorrichtung (412) über die dritte Rechenvorrichtung (413) mit der zweiten Speichervorrichtung (402) gekoppelt ist,
in eine zweite Konfiguration, wobei
die zweite Rechenvorrichtung (412) über die erste Rechenvorrichtung (411), die vierte Rechenvorrichtung (421), die dritte Speichervorrichtung (403) und die fünfte Rechenvorrichtung (422) mit der ersten Speichervorrichtung (401) gekoppelt ist.

13. Informationsverarbeitungsprogramm eines Systems (100), in dem Daten in einem Streamverarbeitungsformat verarbeitet werden, das einen Computer veranlasst, einen Prozess auszuführen, der das Verfahren nach Anspruch 12 implementiert.

## Revendications

1. Système de traitement d'informations (100, 200) dans lequel des données sont traitées dans un format de traitement de flux, le système de traitement d'informations comprenant :
une pluralité de dispositifs de stockage (102, 201) comprenant un premier dispositif de stockage (401), un deuxième dispositif de stockage (402), et un troisième dispositif de stockage (403), dans lequel
chacun des dispositifs de stockage est configuré pour délivrer en sortie des données à un premier trajet connecté à un dispositif arithmétique sur une pluralité de dispositifs arithmétiques (103) ;
la pluralité de dispositifs arithmétiques (103) comprenant un premier dispositif arithmétique (411), un deuxième dispositif arithmétique (412), un troisième dispositif arithmétique (413), un quatrième dispositif arithmétique (421), et un cinquième dispositif arithmétique (422), dans lequel
chacun des dispositifs arithmétiques est configuré pour
recevoir un message (700) indiquant une sauvegarde d'un état interne à au moins deux premiers trajets ;
délivrer en sortie un second trajet connecté à un dispositif de stockage (403) ou un autre dispositif arithmétique (421) ;
en réponse à la réception du message à les au moins deux premiers trajets, sauvegarder son état interne, et délivrer un autre message indiquant une sauvegarde d'un état interne au second trajet,
et le premier dispositif arithmétique (411) est lent en fonctionnement et le cinquième dispositif arithmétique (422) est rapide en fonctionnement ; et
un dispositif de commande (101) configuré pour
acquérir des informations d'un temps d'attente jusqu'à ce que le deuxième dispositif arithmétique (412) reçoive le message à les au moins deux premiers trajets, dans lequel
le temps d'attente est estimé en fonction des charges de traitement du premier dispositif arithmétique (411) et du troisième dispositif arithmétique (413),
déterminer si oui ou non le temps d'attente est égal ou supérieur à un premier seuil, en fonction des informations acquises, et, lorsqu'il est déterminé que le temps d'attente est égal ou supérieur au premier seuil,
changer une première configuration (400),
dans lequel le deuxième dispositif arithmétique (412) est couplé au premier dispositif de stockage (401) via le premier dispositif arithmétique (411), et le deuxième dispositif arithmétique (412) est couplé au deuxième dispositif de stockage (402) via le troisième dispositif arithmétique (413),
dans une seconde configuration (430), dans lequel
le deuxième dispositif arithmétique (412) est couplé au premier dispositif de stockage (401) via le premier dispositif arithmétique (411), le quatrième dispositif arithmétique (421), le troisième dispositif arithmétique (403), et le cinquième dispositif arithmétique (422).

2. Système de traitement d'informations selon la revendication 1,
dans lequel le dispositif de commande (101) :
est configuré pour déterminer si oui ou non le temps d'attente est inférieur à un second seuil, en fonction des informations acquises, et
changer la seconde configuration (403) pour la première configuration (400) lorsqu'il est déterminé que le temps d'attente est inférieur au second seuil.

3. Système de traitement d'informations selon la revendication 1 ou 2,
dans lequel le dispositif de commande (101) est configuré pour changer une destination de sortie du premier dispositif arithmétique (411) du deuxième dispositif arithmétique (412) au quatrième dispositif arithmétique (421) lorsqu'il est déterminé que le temps d'attente est égal ou supérieur au premier seuil.

4. Système de traitement d'informations selon la revendication 3,
dans lequel le dispositif de commande (101) est configuré pour changer une destination de sortie du premier dispositif arithmétique (411) du quatrième dispositif arithmétique (412) au deuxième dispositif arithmétique (421) lorsqu'il est déterminé que le temps d'attente est égal ou supérieur au second seuil.

5. Système de traitement d'informations selon la revendication 4,
dans lequel le dispositif de commande (101) est configuré pour commander le premier dispositif de stockage (401) pour délivrer en sortie une demande pour définir la destination de sortie du premier dispositif arithmétique (411) au deuxième dispositif arithmétique (412) lorsqu'il est déterminé que le temps d'attente est inférieur au second seuil de sorte que la demande est transférée au premier dispositif arithmétique (411) et au quatrième dispositif arithmétique (412),
dans lequel le quatrième dispositif arithmétique (421) est configuré pour stocker l'entrée de données dans le quatrième dispositif arithmétique (421) et délivrer en sortie les données stockées au deuxième dispositif arithmétique (412) lorsque la demande est reçue, et
dans lequel le premier dispositif arithmétique (411) est configuré pour changer la destination de sortie du premier dispositif arithmétique (411) du quatrième dispositif arithmétique (421) au deuxième dispositif arithmétique (412).

6. Système de traitement d'informations selon la revendication 1 ou 2, dans lequel
le premier dispositif arithmétique (411) et le deuxième dispositif arithmétique (412) sont configurés pour exécuter une première tâche (1511) et une seconde tâche (1513) pour traiter des données prédéterminées, respectivement, par chacun desdits processeurs,
le premier dispositif arithmétique (411) est couplé au deuxième dispositif arithmétique (412) et configuré pour transmettre les données d'un résultat de traitement de la première tâche au deuxième dispositif arithmétique lorsque la première tâche est exécutée,
le dispositif de commande est configuré pour transférer la première tâche (1511) du premier dispositif arithmétique (411) au quatrième dispositif arithmétique (421) capable d'exécuter la première tâche lorsqu'il est déterminé que le temps d'attente est égal ou supérieur au premier seuil,
le premier dispositif arithmétique (411) est couplé au quatrième dispositif arithmétique (421) et configuré pour transmettre les données au quatrième dispositif arithmétique lorsqu'il n'exécute pas la première tâche,
le quatrième dispositif arithmétique (421) est couplé au troisième dispositif de stockage (403) et configuré pour transmettre les données des résultats de traitement de la première tâche (1511) au troisième dispositif de stockage (403),
le troisième dispositif de stockage (403) est couplé au cinquième dispositif arithmétique (422) et configuré pour transmettre les données au cinquième dispositif arithmétique (422), et
le cinquième dispositif arithmétique (422) est couplé au deuxième dispositif arithmétique (412) et configuré pour transmettre les données au deuxième dispositif arithmétique.

7. Système de traitement des informations selon la revendication 6, dans lequel le dispositif de commande (101) est configuré pour transférer la première tâche (1511) du quatrième dispositif arithmétique (421) au premier dispositif arithmétique (411) lorsqu'il est déterminé que le temps d'attente est inférieur au second seuil.

8. Système de traitement d'informations selon la revendication 7, dans lequel
le dispositif de commande (101) est configuré pour commander le premier dispositif de stockage (401) pour délivrer en sortie une demande pour transférer la première tâche (1511) du quatrième dispositif arithmétique (421) au premier dispositif arithmétique (411) lorsqu'il est déterminé que le temps d'attente est inférieur au second seuil,
le premier dispositif arithmétique (411) est configuré pour transmettre la demande au quatrième dispositif arithmétique (421) et stocker les données après la demande lorsque la demande est reçue,
le quatrième dispositif arithmétique (421) est configuré pour terminer la première tâche (1511) et transmettre des informations de traitement définissant les contenus de traitement de la première tâche (1511) au troisième dispositif de stockage (403) lorsque la demande est reçue,
le troisième dispositif de stockage de données (403) est configuré pour transmettre les informations de traitement au cinquième dispositif arithmétique (422),
le cinquième dispositif arithmétique (422) est couplé au premier dispositif arithmétique (411) et est configuré pour transmettre les informations de traitement au premier dispositif arithmétique (411), et
le premier dispositif arithmétique (411) est configuré pour exécuter la première tâche (1511) en fonction des informations de traitement et pour transmettre les données du résultat de traitement de la première tâche (1511) au deuxième dispositif arithmétique (412) en fonction des données après la demande lorsque les informations de traitement sont reçues.

9. Système de traitement d'informations selon l'une quelconque des revendications 1 à 8, dans lequel
un trajet du premier dispositif arithmétique (411, 1511) au deuxième dispositif arithmétique (412, 1513), qui n'inclut pas le troisième dispositif de stockage (403) dans la première configuration, et
un trajet du premier dispositif arithmétique (411) au deuxième dispositif arithmétique (412), qui inclut le troisième dispositif de stockage (403), se joignent au deuxième dispositif arithmétique (412) dans la seconde configuration.

10. Système de traitement d'informations selon l'une quelconque des revendications 1 à 9, dans lequel
le dispositif de commande (101) est configuré pour fonctionner en tant que le troisième dispositif de stockage (403) et changer la première configuration (400) en deuxième configuration (430) lorsqu'il est déterminé que le temps d'attente est égal ou supérieur au premier seuil.

11. Système de traitement d'informations selon l'une quelconque des revendications 1 à 10, dans lequel le message est délivré en sortie de l'un de la pluralité de dispositifs de stockage (102, 201) et ensuite est abandonné sans être entré dans un autre dispositif de stockage.

12. Procédé de traitement d'informations d'un système (100) dans lequel des données sont traitées dans un format de traitement de flux, le procédé de traitement d'informations comprenant :
le fait de délivrer en sortie les données à un premier trajet connectant un dispositif de stockage à un dispositif arithmétique, par un premier processeur,
dans lequel le dispositif de stockage est un dispositif de stockage parmi une pluralité de dispositifs de stockage comprenant un premier dispositif de stockage (401), un deuxième dispositif de stockage (402) et un troisième dispositif de stockage (403), et
le dispositif arithmétique est un dispositif arithmétique parmi une pluralité de dispositifs arithmétiques comprenant un premier dispositif arithmétique (411), un deuxième dispositif arithmétique (412), un troisième dispositif arithmétique (413), un quatrième dispositif arithmétique (421), et un cinquième dispositif arithmétique (422) ;
dans lequel le deuxième dispositif arithmétique (412) réalise les étapes de
réception d'un message (700) indiquant une sauvegarde d'un état interne à au moins deux premiers trajets,
le fait de délivrer en sortie des données à un second trajet connecté à un dispositif de stockage ou un autre dispositif arithmétique (421), en réponse à la réception du message à les au moins deux premiers trajets, la sauvegarde de son état interne, et le fait de délivrer en sortie un autre message indiquant la sauvegarde d'un état interne au second trajet ; et
l'acquisition d'informations par un dispositif de commande d'un temps d'attente jusqu'à ce que le deuxième dispositif arithmétique (413) (412) reçoive le message à les au moins deux premiers trajets, dans lequel le temps d'attente est estimé en fonction des charges de traitement du premier dispositif arithmétique (411) et du troisième dispositif arithmétique (413),
la détermination de si oui ou non le temps d'attente est égal ou supérieur à un premier seuil, en fonction des informations acquises, et, lorsqu'il est déterminé que le temps d'attente est égal ou supérieur au premier seuil par le dispositif de commande,
le changement par le dispositif de commande d'une première configuration,
dans lequel le deuxième dispositif arithmétique (412) est couplé au premier dispositif de stockage (401) via le premier dispositif arithmétique (411) et le deuxième dispositif arithmétique (412) est couplé au deuxième dispositif de stockage (402) via le troisième dispositif arithmétique (413),
dans une seconde configuration, dans lequel
le deuxième dispositif arithmétique (412) est couplé au premier dispositif de stockage (401) via le premier dispositif arithmétique (411), le quatrième dispositif arithmétique (421), le troisième dispositif arithmétique (403), et le cinquième dispositif arithmétique (422).

13. Programme de traitement d'informations d'un système (100) dans lequel des données sont traitées dans un format de traitement de flux, qui amène un ordinateur à exécuter un traitement, qui exécute le procédé selon la revendication 12.
